(19) **Europäisches Patentamt / European Patent Office / Office européen des brevets**

(11) **EP 1 435 734 B1**

(12) **EUROPEAN PATENT SPECIFICATION**

(45) Date of publication and mention
of the grant of the patent:
**15.02.2012 Bulletin 2012/07**

(21) Application number: **02765569.5**

(22) Date of filing: **17.09.2002**

(51) Int Cl.:
*G11B 20/00* (2006.01)    *G11B 27/10* (2006.01)
*G11B 27/32* (2006.01)    *H04N 5/91* (2006.01)

(86) International application number:
**PCT/JP2002/009493**

(87) International publication number:
**WO 2003/034722 (24.04.2003 Gazette 2003/17)**

(54) **VIDEO INFORMATION RECORDING APPARATUS AND VIDEO INFORMATION REPRODUCTION APPARATUS**

VIDEOINFORMATIONS-AUFZEICHNUNGSVORRICHTUNG UND VIDEOINFORMATIONS-WIEDERGABEVORRICHTUNG

DISPOSITIF D'ENREGISTREMENT D'INFORMATIONS VIDEO ET DISPOSITIF DE REPRODUCTION D'INFORMATIONS VIDEO

(84) Designated Contracting States:
**DE FI FR GB IT SE**

(30) Priority: **09.10.2001 JP 2001311525**

(43) Date of publication of application:
**07.07.2004 Bulletin 2004/28**

(73) Proprietor: **Sony Corporation
Tokyo 141-0001 (JP)**

(72) Inventors:
• **KATO, Motoki,
c/o SONY CORPORATION
Tokyo 141-0001 (JP)**

• **NAKAMURA, Masanobu,
c/o SONY CORPORATION
Tokyo 141-0001 (JP)**

(74) Representative: **DeVile, Jonathan Mark
D Young & Co LLP
120 Holborn
London EC1N 2DY (GB)**

(56) References cited:
EP-A2- 1 061 515    EP-A2- 1 089 241
WO-A-01/82606    JP-A- 4 163 768
JP-A- 9 275 523    JP-A- 2000 013 720
JP-A- 2000 013 720    JP-A- 2002 191 077
JP-A- 2002 209 164

**Description**

Technical Field

In general, the present invention relates to a video-information-recording apparatus and a video-information reproduction apparatus. More particularly, the present invention relates to a video-information-recording apparatus and a video-information reproduction apparatus that each has a configuration allowing security information of an AV signal recorded on a recording medium to be managed properly.

Background Art

In recent years, there has been proposed a variety of optical discs to be used as a disc-type information-recording medium that can be removed from a recording/reproduction apparatus. Such a recordable optical disc has been proposed as a recording medium having a large storage capacity of several gigabytes and is thus highly expected as a recording medium for storing a digital video (moving-picture) signal.

There is an MPEG (Moving Picture Experts Group)-2 technique provided as one of encoding techniques for digitally compressing digital video information. This MPEG2 technique can.also be applied to a case in which digital video information is recorded onto a recording medium. In a process to store analog video information onto a recording medium, for example, the video information is encoded by adoption of the MPEG2 technique to produce an encoded bit stream, which is then recorded onto the recording medium. In addition, in a digital TV broadcasting system that began in recent years, a video program encoded by adoption of the MPEG2 is transmitted as a digital broadcast in a format known as a transport stream. In a process to record the digital broadcast onto a recording medium, there is provided a technique whereby the transport stream is recorded onto the recording medium as it is without the need to carry out decoding and re-encoding processes.

Video information recorded on a recording medium in a digital-signal format can be copied to another recording medium without deteriorations at all. However, such a copy operation raises a problem of infringing a copyright for the video content represented by the video information. In order to solve this problem, there is provided a method for imposing restrictions on an operation to copy video information by providing the video information with CCI (Copy Control Information) used as copy generation management information including 'Copy Free', 'Copy Once', 'No More Copy' and 'Copy Prohibited'. The CCI of 'Copy Free' indicates that the video information can be copied. The CCI of 'Copy Once' indicates that the video information can be copied to produce one generation only. The CCI of 'No More Copy' indicates that no more generations of the video information can be copied. The CCI of 'Copy Prohibited' indicates that the video information cannot be copied. An example of the method for imposing restrictions on an operation to copy video information is the use of a signal called a CGMS (Copy Generation Management System) signal. The CGMS signal for analog interfaces is known as CGMS-A while the CGMS signal for digital interfaces is known as CGMS-D. The analog-interface CGMS signal CGMS-A is also referred to as a VBID signal due to the fact that an ID is superposed on the VBI (Vertical Blanking Interval) of the video information. The analog-interface CGMS signal CGMS-A is standardized as EIAJ CP-1204.

In addition, for transmission of CCI as a part of a transport stream, there is provided a method of encoding a descriptor describing the information. This descriptor can be a DTCP descriptor prescribed by a DTLA (Digital Transmission Licensing Administrator) and digital_copy_control_descriptor used in digital broadcasting system in Japan prescribed by the ARIB. In recent years, a technique of embedding copy generation management information in base-band video information and an MPEG video stream is also being studied. The copy generation management information is referred to as a watermark. Copy generation management information is embedded in base-band video information and an MPEG video stream to impose more powerful restrictions on operations to copy video information. At the present time, activities to standardize the watermark are being promoted. As a standard, there have been proposed a millennium system and a galaxy system.

There is a demand for imposition of correct recording restrictions according to CCI of an input signal on a process to record video information onto a recording medium. In general, video information that can be recorded onto a recording medium by the user is video information received as an input signal with CCI of 'Copy Free' or 'Copy Once' only. In the case of video information received as an input signal with CCI of 'Copy Once', the CCI must be changed to 'No More Copy' after the video information is recorded onto the recording medium.

By the way, in order to allow the user to easily understand the contents of video information recorded on a recording medium, a static picture representing the contents or a picture of a specific scene extracted from the contents as a static picture may be recorded in some cases on a recording medium separately from the video information. These static pictures are known as a thumbnail picture. By displaying a list of such thumbnail pictures on a menu screen to be used by the user to select the position of the start of reproduction from video information recorded on a recording medium, it is possible to provide an interface in a form that can be understood by the user with ease. A thumbnail picture can also be a picture selected from recorded video information, or a picture obtained from a source such as a personal computer or a digital still camera and stored onto the recording medium.

As explained in the section describing the background art, much caution is exercised in the management of content protection information of video information in operations to record video information onto a recording medium. On the other hand, no caution is exercised at all in management of content protection information of thumbnail pictures in operations to record the thumbnail pictures onto a recording medium, so that one may think that problems will be raised in the future. That is to say, when recording of information in a digital video information format becomes popular in the future, one may expect that there will be raised a demand for correct execution of management of content protection information of thumbnails in operations to record the thumbnails onto a recording medium. For example, the picture of a popular character of a movie or a TV program conceivably has a copyright in many cases. In these cases, an operation to copy such a picture raises a problem of infringement of a copyright owned by the author.

In an operation to record a picture selected from input video information having CCI of 'Copy Once' onto a recording medium as a thumbnail picture, the thumbnail picture should be treated like a picture with CCI of 'No More Copy' in the same way as the contents of the video information after being recorded on the recording medium. In addition, the thumbnail picture should be encrypted before being recorded onto the recording medium. By treating the thumbnail picture in this way, it is possible to prevent a copy of a thumbnail picture from being reproduced even if the copy has been obtained by copying the thumbnail picture already converted into a thumbnail picture with CCI of .'No More Copy' to another recording medium in a bit-by-bit copy operation.

That is to say, in an operation carried out by a video recorder to record video information having CCI of 'Copy Once' onto a recording medium, the video recorder should be provided with a function for encrypting and recording both the video information and the thumbnail picture of the video information. Encryption methods for encrypting video information and the thumbnail picture of the video information include DES, Triple-DES and AES.

On the other hand, a video recorder for recording only video information with CCI of 'Copy Free' may be provided as a commodity. For example, the present ground-wave analog TV broadcasting system is capable of broadcasting content with CCI of 'Copy Free'. In this case, a general user may have a video recorder capable of recording only ground-wave analog TV broadcasts for the user's own use. It is not necessary to provide such a video recorder with a function for encrypting and recording both video information and a thumbnail picture of the video information. It is needless to say that the user may use a video recorder provided with a function for encrypting and recording both video information and a thumbnail picture of the video information.

In applications where both video information and a thumbnail picture of the video information are conceivably recorded onto a recording medium removable from a video recorder, it is quite within the bounds of possibility that encrypted thumbnail pictures coexist with unencrypted thumbnail pictures on the recording medium. In this case, there may be raised a problem of impossibility to determine whether a thumbnail picture recorded on the recording medium is an encrypted or unencrypted picture unless there is provided a mechanism for managing encrypted thumbnail pictures and unencrypted thumbnail pictures by distinguishing the former and the latter from each other.

A prior art digital camera is described in JP-A-2000 013720.

A prior art disk security system is described in JP-A-04 163768.

Disclosure of Invention .

Various aspects and features of the invention are defined by the claims. Embodiments of the present invention seek to address the problem described above to provide a mechanism capable of managing encrypted thumbnail pictures recorded on a recording medium and unencrypted thumbnail pictures recorded on the same recording medium by distinguishing the former and the latter from each other even if it is quite within the bounds of possibility that encrypted thumbnail pictures coexist with unencrypted thumbnail pictures on the recording medium.

Another embodiment of the present invention seeks to provide a mechanism used for reading out particular information for distinguishing an encrypted thumbnail picture recorded on a recording medium and an unencrypted thumbnail picture recorded on the same recording medium " from each other from the recording medium in addition to a specific video information reproduced from the recording medium on the basis of the particular information in an operation to reproduce the specific thumbnail picture from the recording medium for storing video information and thumbnail pictures including representative pictures of the video information and pictures at characteristic points of the video information.

A video-information-recording apparatus of the present invention includes means as defined in claim 1.

A video-information-recording method of the present invention includes steps as defined in claim 9.

A first recording medium of the present invention to store a program is defined in claim 11.

A first program of the present invention includes steps as defined in claim 10.

A video-information reproduction apparatus of the present invention includes means as defined in claim 12.

A video-information reproduction method of the present invention includes steps as defined in claim 17.

A second recording medium of the present invention to store a program is defined in claim 19.

A second program of the present invention includes steps as defined in claim 18.

Brief Description of Drawings

Fig. 1 is an explanatory diagram showing the structure of the format of an application;
Fig. 2 is an explanatory diagram showing marks on PlayList and Clip;
Fig. 3 is an explanatory diagram showing a menu thumbnail and a mark thumbnail;
Fig. 4 is an explanatory diagram showing a menu thumbnail;
Fig. 5 is an explanatory diagram showing marks attached on PlayList;
Fig. 6 is an explanatory diagram showing marks attached on Clip;
Fig. 7 is an explanatory diagram showing files each used for storing thumbnails;
Fig. 8 is an explanatory diagram showing an organization of directories created on a disc;
Fig. 9 is an explanatory diagram showing the structure of a DVR MPEG2 transport stream;
Fig. 10 is an explanatory diagram showing the syntax of UIAppInfoDVR;
Fig. 11 is an explanatory diagram showing the syntax of PlayListMark;
Fig. 12 is an explanatory diagram showing the syntax of ClipMark;
Fig. 13 is an explanatory diagram showing a method of storing data of a thumbnail picture in tn_block;
Fig. 14 is an explanatory diagram showing an encryption process;
Fig. 15 is an explanatory diagram showing the syntax of a thumbnail-information file;
Fig. 16 is an explanatory diagram showing the syntax of a thumbnail-picture file;
Fig. 17 is an explanatory diagram showing the syntax of tn_block;
Fig. 18 is an explanatory diagram showing the syntax of CP_Info_thumbnail( );
Fig. 19 is an explanatory diagram showing CCI_thumbnail;
Fig. 20 is an explanatory diagram showing APS_thumbnail;
Fig. 21 is an explanatory diagram showing a method of storing picture data of a thumbnail in tn_block( );
Fig. 22 is an explanatory diagram showing an encryption process carried out in tn_block units
Fig. 23 is an explanatory diagram showing an encryption process carried out in ECC-block units;
Fig. 24 is an explanatory diagram showing the syntax of the thumbnail-information file;
Fig. 25 is an explanatory diagram showing the syntax of the thumbnail-picture file;
Fig. 26 is a block diagram showing the configuration of a recording apparatus applying the present invention;
Fig. 27 is an explanatory diagram showing copy-control processing carried out in an operation to record an AV stream;
Fig. 28 is an explanatory diagram showing copy-control processing carried out in an operation to input a transport stream;
Fig. 29 shows a flowchart representing a process to encrypt a thumbnail and record the encrypted thumbnail;
Fig. 30 is a block diagram showing another typical configuration of the recording apparatus applying the present invention;
Fig. 31 shows a flowchart representing a process to add a thumbnail of a specified picture and record the added thumbnail;
Fig. 32 is a block diagram showing the configuration of a reproduction apparatus applying the present invention; and
Fig. 33 shows a flowchart representing a process to reproduce a thumbnail.

Best Modes for Carrying Out the Invention

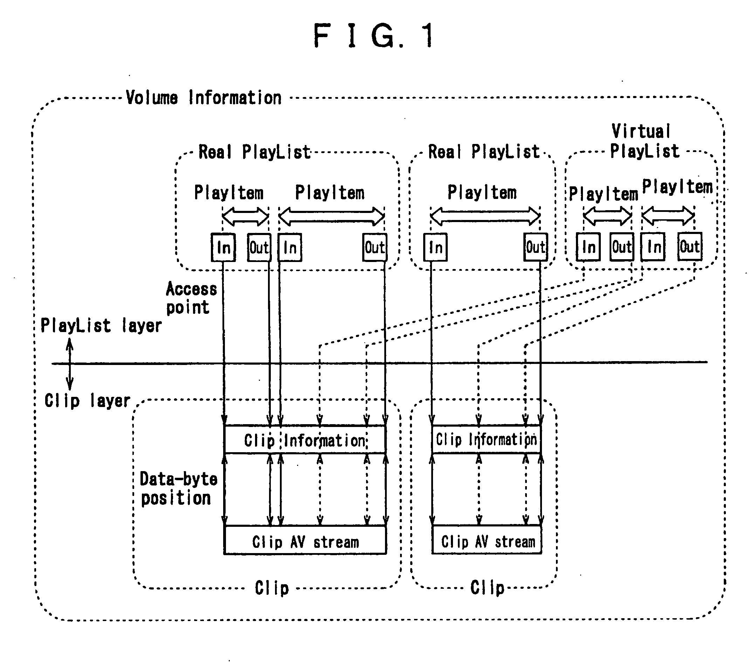

Fig. 1 is a diagram showing a simplified structure of the format of an application recorded in a recording/ reproduction system provided by the present invention. The format has two layers, namely, PlayList and Clip layers, for managing AV streams. Volume information of a disc is used for managing all Clip and PlayList on the layers on the disc.
An AV stream and information affiliated thereto are considered to be a single object called Clip. A file for recording an AV stream is referred to as a Clip AV-stream file and a file for storing the affiliated information is known as a Clip information file.
A Clip AV-stream file is a file used for storing data obtained as a result of laying out an MPEG2 transport stream into a structure prescribed in accordance with a DVR application format.
In general, a data file used in an apparatus such as a computer is treated like an array of data bytes. In particular, a content stored in a Clip AV-stream file is laid out along the time axis. A PlayList specifies an access point on a Clip mainly as a timestamp. With a PlayList specifying an access point on a Clip as a timestamp, the Clip information file is useful for finding an address information at which an operation to decode an AV stream recorded in the Clip AV-stream file should be started.

The PlayList is introduced for the purpose of allowing a reproduction segment, which the user wants to see, to be selected from a Clip and to be edited with ease. One PlayList is a collection of reproduction segments in a Clip. A reproduction segment on a Clip layer is called PlayItem, which is represented by a pair of IN and OUT points on the time axis. Thus, a PlayList is a collection of PlayItem.

There are two types of PlayList. One of the PlayList types is Real PlayList and the other PlayList type is Virtual PlayList. A Real PlayList is regarded as a PlayList physically associated with stream portions of a Clip, which is referenced by the Real PlayList. That is to say, a Real PlayList occupies the data area in the disc allocated to the stream portion of a Clip referenced by the Real PlayList. When an AV stream is recorded as a new Clip, a Real PlayList referencing the whole reproducible range of the new Clip is automatically created. When a portion of the reproduction range of a Real PlayList is deleted, on the other hand, the data of the stream portion of the Clip referenced by the deleted portion of the reproduction range is also deleted. A Virtual PlayList is regarded as a PlayList physically associated with no data of a Clip. When a Virtual PlayList is changed or deleted, no Clip is affected.

It is to be noted that, in the following description, Real PlayList and Virtual PlayList are called PlayList as a generic name.

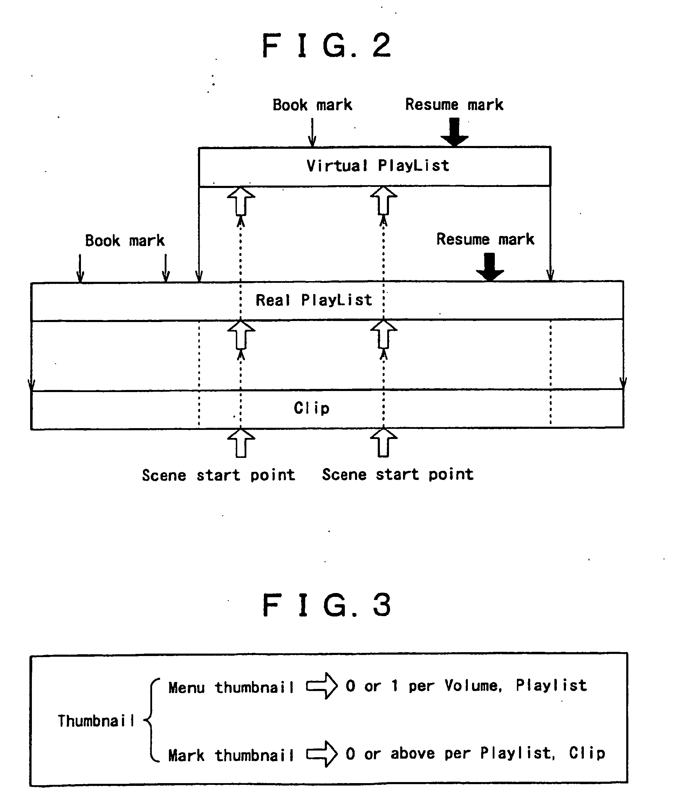

A mark is used for specifying a highlight or a specific time in a Clip or PlayList as shown in Fig. 2. (1): A mark added to a Clip is used for specifying a specific scene attributed to contents of an AV stream. An example of a specific scene is a scene-change point. In an operation to reproduce a PlayList, marks added to a Clip referenced by this PlayList are referred to. (2): A mark added to a PlayList is set mainly by the user. Examples of such a mark are a book mark and a resume mark. (3): When a mark is set in a Clip or PlayList, a timestamp showing the time of the set mark is added to a mark list. When a mark is deleted from a Clip or PlayList, on the other hand, a timestamp showing the time of the deleted mark is removed from the mark list. Thus, an operation to set or delete a mark does not affect the AV stream.

A thumbnail is a static picture added to a volume (which is a disc), a PlayList or a Clip. There are two thumbnail types shown in Fig. 3. One of the types of a thumbnail is a representative picture representing the contents of the volume, the contents of the PlayList or the contents of the Clip. This type of thumbnail is displayed on a menu screen to be selected by the user by typically operating a cursor in an operation to specify a volume (a disc), a PlayList or a Clip whose contents are to be seen by the user. The other thumbnail type is a picture representing a scene pointed to by a mark.

It is to be noted that, as shown in Fig. 3, no menu thumbnail or one menu thumbnail is provided for each disc (volume) or each PlayList, and no menu thumbnail, one menu thumbnail or a plurality of menu thumbnails are provided for every PlayList or Clip.

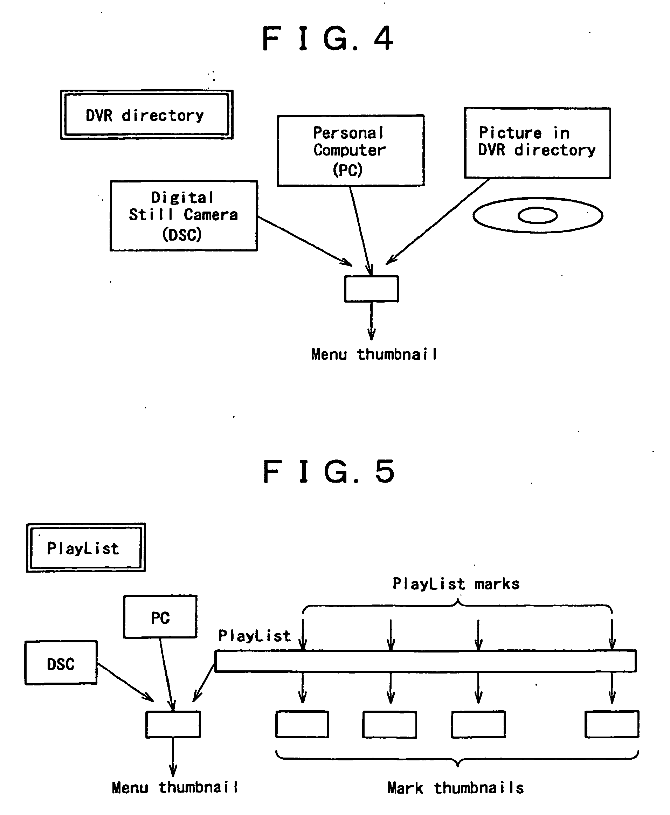

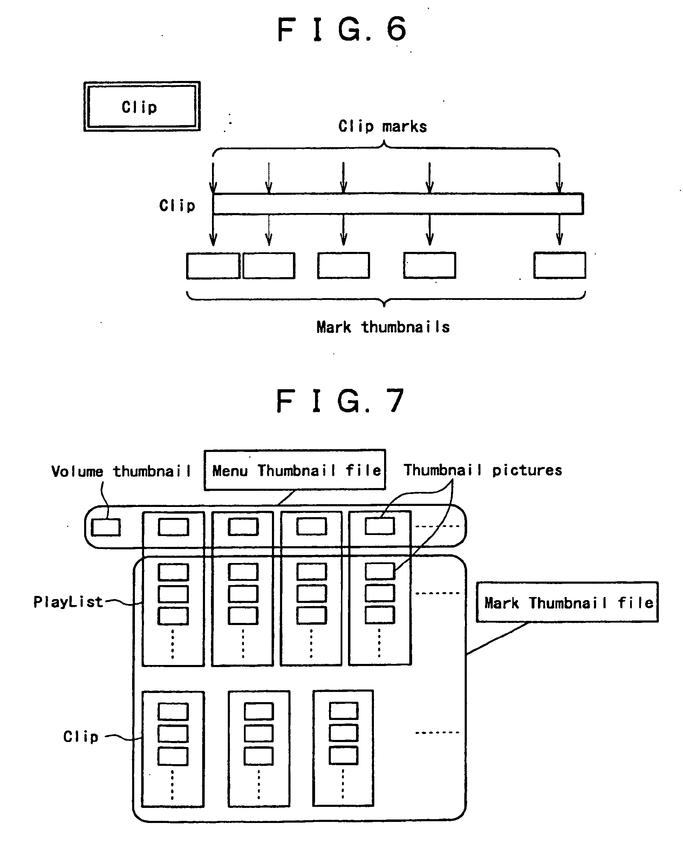

That is to say, a volume and every PlayList are each allowed to have a representative picture. The representative static picture of a volume is created on the assumption that the representative static picture is a picture representing the contents of the volume and will be displayed initially when the volume is mounted on a player. The representative static picture of a volume is a menu thumbnail like one shown in Fig. 4. The representative picture of a PlayList is created on the assumption that the representative static picture will be displayed on a menu screen as a static picture representing the contents of the PlayList. The representative static picture of a PlayList is a menu thumbnail like one shown in Fig. 5. A simple method for determining a representative picture of a PlayList is use of a first picture of the PlayList as a thumbnail. However, the picture located at the head of a PlayList and reproduced at a time of 0 is not necessarily an optimum picture for representing the contents of the PlayList. Thus, any arbitrary picture can be selected as the thumbnail of a PlayList. The thumbnail representing a volume or a PlayList described above is called a menu thumbnail. Since a menu thumbnail is displayed frequently, it is necessary to have a menu thumbnail that can be read out from a disc at a high speed. In order to fulfill this necessity, there is provided an effective technique of storing all menu thumbnails in one file. Refer to Fig. 7 showing a menu thumbnail as described later. A menu thumbnail is not necessarily a picture extracted from a moving picture stored on the volume. Instead, a menu thumbnail can be a picture taken by using a personal computer (PC) or a digital still camera (DSC) as shown in Fig. 4.

On the other hand, a Clip or PlayList requires a plurality of marks, and it is necessary to make the user capable of seeing a picture at a mark point in order to know contents at the mark position with ease. A picture representing a mark point is referred to as a mark thumbnail. Mark thumbnails are shown in Figs. 5 and 6. Thus, as a mark thumbnail for a mark, mainly, a picture extracted at the mark point is used rather than a picture taken from an external source. Unlike a menu thumbnail, a mark thumbnail is used in, among others, a sub-menu used for representing details of a PlayList. Thus, a short time of an access to a mark thumbnail is not required. As a result, no problem is raised even if time is required to a certain degree in an operation, which is carried out by a player to open a file and read out a portion of data from the file every time a mark thumbnail is needed. In addition, in order to reduce the number of files stored in a volume, it is nice to store all mark thumbnails in one file. Refer to Fig. 7 showing a mark-thumbnail file. There is a case in which a PlayList has a menu thumbnail and a plurality of mark thumbnails. Since the user never selects a Clip directly, that is, the user usually selects a Clip through a PlayList, however, a Clip does not have a menu thumbnail.

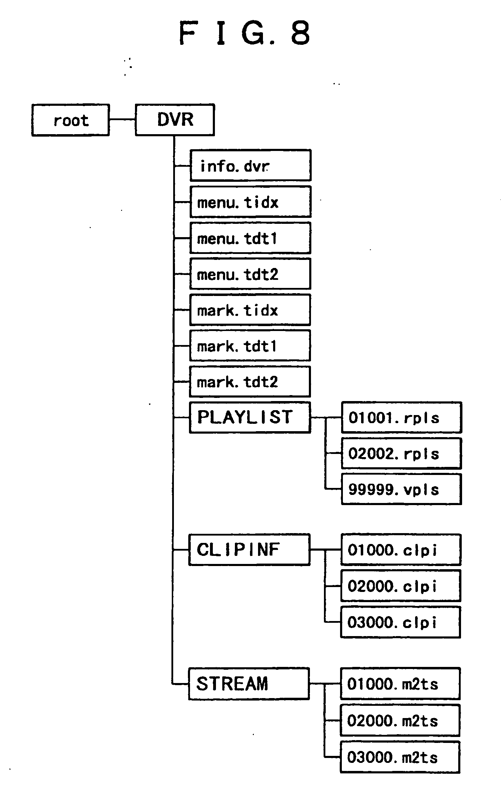

A DVR disc requires a root directory including a 'DVR' directory. The 'DVR' directory includes a 'PLAYLIST' directory, a 'CLIPINF' directory and a 'STREAM' directory. Fig. 8 is a diagram showing the organization of these directories in a DVR disc.

The root directory includes one directory. All other directories and all files prescribed in a DVR application format must be accommodated in the 'DVR' directory.

The 'DVR' directory also includes the following files:

info.dvr: A file used for storing general information of an application layer. This file is created under the DVR directory.
menu.tidx, menu.tdt1 and menu.tdt2: These three files stores information related to menu-thumbnail pictures.
menu.tidx: A thumbnail information file for storing header information of menu-thumbnail pictures.
menu.tdt1: A first thumbnail-picture file for storing picture data of menu-thumbnail pictures in an encrypted state.
menu.tdt2: A second thumbnail-picture file for storing picture data of menu-thumbnail pictures in an unencrypted state.

If a video recorder is provided with a function for encrypting a menu-thumbnail picture and recording the encrypted menu-thumbnail picture, the encrypted menu-thumbnail picture is stored in the menu.tdt1 file. In addition, a menu-thumbnail picture produced from video information with a 'Copy Once' CCI is also stored in the menu.tdt1 file. A menu-thumbnail picture produced from video information with a 'Copy Free' CCI is also stored in the menu.tdt1 file as well.

If a video recorder is provided with a function for recording only video information with a 'Copy Free' CCI but not provided with the function for encrypting a menu-thumbnail picture and recording the encrypted menu-thumbnail picture, menu-thumbnail pictures for the video information are stored in the menu.tdt2 file.

The menu.tidx file is used for storing information for each menu-thumbnail picture. The information stored in the menu.tidx file for a menu-thumbnail picture is information indicating whether the menu-thumbnail picture is encrypted or unencrypted data, that is, information indicating whether or not the menu-thumbnail picture is a picture stored in the menu.tdt1 or menu.tdt2 file.

Information indicating whether each menu-thumbnail picture is encrypted or unencrypted data is collected in and managed by using the thumbnail-information file named menu.tidx so that the menu-thumbnail pictures can be managed by using a thumbnail-information file named menu.tidx as a database with a relatively small size. Thus, when reproduction of a menu-thumbnail picture is requested, the information indicating whether the menu-thumbnail picture is encrypted or unencrypted data can be acquired with ease and at a high speed.

'mark.tidx', 'mark.tdt1' and 'mark.tdt2': These three files store information related to mark-thumbnail pictures.

mark.tidx: A thumbnail information file for storing header information of mark-thumbnail pictures.

mark.tdt1: A first thumbnail-picture file for storing picture data of mark-thumbnail pictures in an encrypted state.

mark.tdt2: A second thumbnail-picture file for storing picture data of mark-thumbnail pictures in an unencrypted state.

A method for determining whether a thumbnail picture is to be recorded in the mark.tdt1 or mark.tdt2 file is the same as the method adopted for menu thumbnails as described above. By the same token, effects obtained by separation of the thumbnail-information file from the thumbnail-picture files are the same as the effects obtained for menu thumbnails as described above.

The DVR directory includes the three directories.

PLAYLIST: Database files for Real PlayList and Virtual PlayList must be placed under this directory.

CLIPINF: A database for Clip must be placed under this directory.

STREAM: An AV-stream file must be placed under this directory.

The 'PLAYLIST' directory is used for storing two types of PlayList file, namely, Real PlayList and Virtual PlayList types.

xxxxx.rpls: This file is used for storing information on a Real PlayList. That is to say, this file is created for every Real PlayList. The name of this file is 'xxxxx.rpls', where 'xxxxx' is five numerical digits each having a value in the range 0 to 9. A file-name extension must be spelled as 'rpls'.

yyyyy.vpls: This file is used for storing information on a Virtual PlayList. That is, this file is created for every Virtual PlayList. The name of this file is 'yyyyy.vpls', where 'yyyyy' is five numerical digits each having a value in the range 0 to 9. A file-name extension must be spelled as 'vpls'.

The 'CLIPINF' directory is used for storing Clip-information files each associated with an AV-stream file.

zzzzz.clpi: This file is a Clip-information file associated with an AV-stream file, which can be a Clip AV-stream file or a Bridge-Clip AV-stream file. The name of this Clip-information file is 'zzzzz.clpi', where 'zzzzz.' is five numerical digits each having a value in the range 0 to 9. A file-name extension must be spelled as 'clpi'.

The 'STREAM' directory is used for storing AV-stream files.

zzzzz.m2ts: This file is an AV-stream file handled by the DVR system. The AV-stream file can be a Clip AV-stream file or a Bridge-Clip AV-stream file. The name of this AV-stream file is 'zzzzz.m2ts', where 'zzzzz' is five numerical digits each having a value in the range 0 to 9. A file-name extension must be spelled as 'm2ts'.

A Clip-information file and an AV-stream file associated with the Clip-information file must have the same five numerical digits 'zzzzz' in their file names.

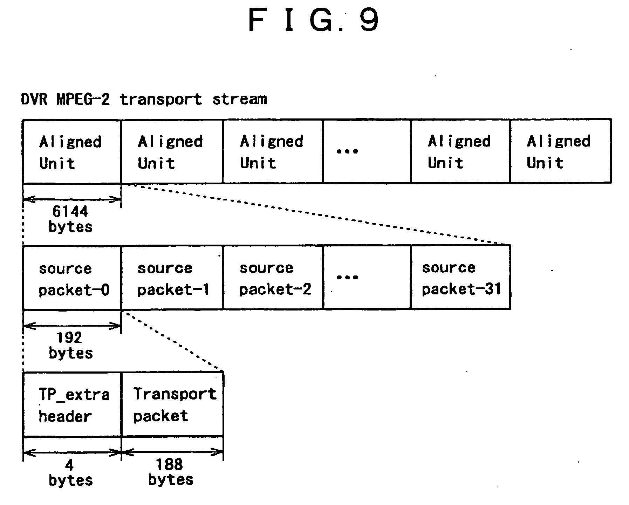

Next, the structure of an AV-stream file is explained. An AV-stream file must have a structure of a DVR MPEG2 transport stream shown in Fig. 9. A DVR MPEG2 transport stream has the following characteristics.

(1): A DVR MPEG2 transport stream comprises an integer number of aligned units.

(2): The size of an aligned unit is 6,144 (= 2,048 * 3) bytes.

(3): An aligned unit starts with the first byte of a source packet.

(4) : A source packet has a length of 192 bytes. A source packet comprises TP_extra_header and a transport packet. TP_extra_header has a length of 4 bytes. On the other hand, the transport packet has a length of 188 bytes.

(5): An aligned unit comprises 32 source packets.

(6): The last aligned unit in the DVR MPEG2 transport stream also comprises 32 source packets.

(7): If the last aligned unit is not completely filled up with transport packets of the input transport stream, the remaining byte area must be filled with null packets each serving as a source packet. A null packet is a transport packet having a PID of 0x1FFF.

TP_extra_header of a source packet includes copy control information for the payload of the transport packet and an arrival timestamp showing a time at which the transport packet arrives at a decoder.

The following description explains the format of a database for controlling information on reproduction of an AV-stream file.

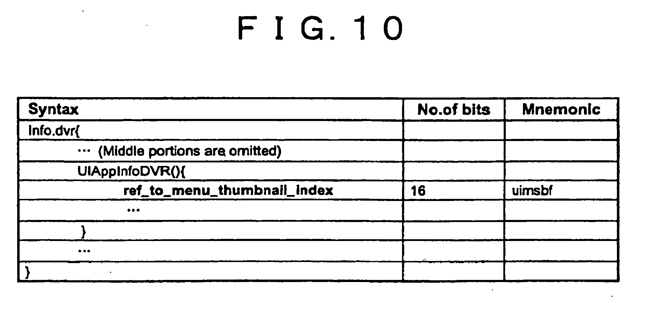

Fig. 10 is a diagram showing the syntax of UIAppInfpoDVR, which is a portion of data stored in info.dvr. ref_ to_menu_thumbnail_index is information on a thumbnail picture representing the volume. A ref_to_menu_thumbnail_ index field having a value other than 0xFFFF indicates that there is a thumbnail picture added to the volume and stored in either the menu.tdt1 or menu.tdt2 file. As will be described later, this picture is referenced by using a value of thumbnail_ index in the menu.tidx file. On the other hand, a ref_to_menu_thumbnail_index field having a value of 0xFFFF indicates that there is no thumbnail picture added to the volume.

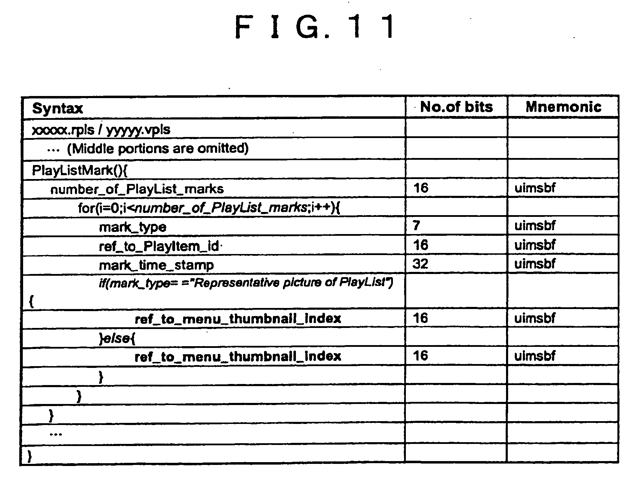

Fig. 11 is a diagram showing the syntax of PlayListMark, which is a portion of data stored in a PlayList file. PlayListMark includes information on marks added to a PlayList. It is to be noted that information on a picture representing the PlayList is also included in PlayListMark.

number_of_PlayList_marks is the number of mark entries, mark information of which is included in PlayListMark.

mark_type is the type of the mark.

ref_to_PlayItem_id is the value of PlayItem_id used for specifying a PlayItem object at which the mark is placed.

mark_time_stamp is a timestamp corresponding to a point specified by the mark.

ref_to_menu_thumbnail_index is information on a thumbnail picture representing the PlayList. A ref_to_menu_ thumbnail_index field having a value other than 0xFFFF indicates that there is a thumbnail picture added to the PlayList and stored in either the menu.tdt1 or menu.tdt2 file. As will be described later, this picture is referenced by using a value of thumbnail_index in the menu.tidx file. On the other hand, a ref_to_menu_thumbnail_index field having a value of 0xFFFF indicates that there is no thumbnail picture added to the PlayList.

ref_to_mark_thumbnail_index is information on a thumbnail picture added to the mark. A ref_to_mark_ thumbnail_index field having a value other than 0xFFFF indicates that there is a thumbnail picture added to the mark and stored in either the mark.tdt1 or mark.tdt2 file. As will be described later, this picture is referenced by using a value of thumbnail_index in the mark.tidx file. On the other hand, a ref_to_mark_thumbnail_index field having a value of 0xFFFF indicates that there is no thumbnail picture added to the mark.

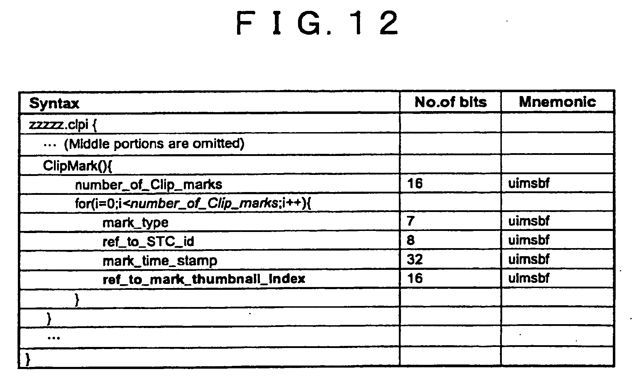

Fig. 12 is a diagram showing the syntax of ClipMark, which is a portion of data stored in a Clip information file. ClipMark includes information on marks added to a Clip.

number_of_Clip_marks is the number of mark entries, mark information of which is included in ClipMark.

mark_type is the type of the mark.

ref_to_STC_id is information specifying the time axis of a system time base of a Clip at which mark_time_ stamp is placed.

mark_time_stamp is a timestamp corresponding to a point in the Clip AV stream specified by the mark.

ref_to_mark_thumbnail index is information on a thumbnail picture added to the mark. A ref_to_mark_ thumbnail_index field having a value other than 0xFFFF indicates that there is a thumbnail picture added to the mark and stored in either the mark.tdt1 or mark.tdt2 file. As will be described later, this picture is referenced by using a value of thumbnail_index in the mark.tidx file. On the other hand, a ref_to_mark_thumbnail_index field having a value of 0xFFFF indicates that there is no thumbnail picture added to the mark.

Contents of a file storing information of thumbnails will be described.

'menu.tidx', 'menu.tdt1' and 'menu.tdt2' are used for storing information on menu thumbnails, which are a picture representing the volume and pictures each representing a PlayList. Pieces of header information for the menu thumbnails collected in the single menu.tidx file and managed by using this file. On the other hand, picture data of the menu thumbnails is stored in menu.tdt1 and menu.tdt2.

By the same token, 'mark.tidx', 'mark.tdt1' and 'mark.tdt2' are used for storing information on mark thumbnails, which are each a picture assigned to a mark point. Pieces of header information for the mark thumbnails added to all Clip and PlayList in the volume are collected in the single mark.tidx file and managed by using this file. On the other hand, picture data of the mark thumbnails is stored in mark.tdt1 and mark.tdt2.

A thumbnail picture is data obtained as a result of encoding a picture by adoption of typically a JPEG encoding technique. Since the JPEG encoding technique is widely used as a de-facto standard, the technique is relatively easy to implement and highly compatible. It is to be noted that the format of a thumbnail picture does not have to conform to the JPEG encoding technique, but the format may also conform to another technique such as an MPEG technique for I pictures, or any of techniques including PNG, GIF and TIFF.

Since a thumbnail is added and deleted frequently, operations to add a thumbnail and partially delete it must be easy to carry out at high speed. For this reason, data stored in menu.tdt1 menu.tdt2, mark.tdt1 and mark.tdt2 has a block structure. That is to say, a thumbnail picture is stored in one block named tn_block.

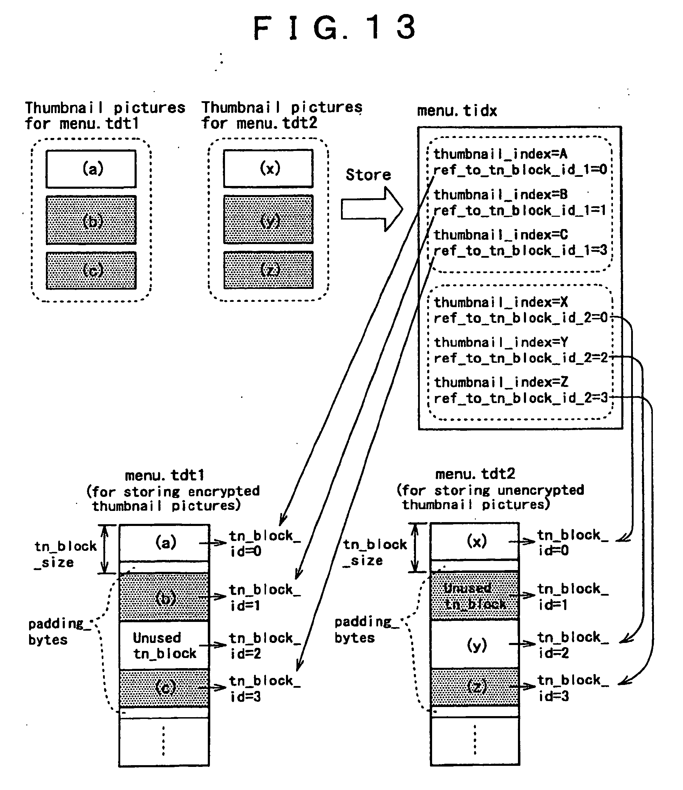

Fig. 13 is a diagram showing a method of using tn_block.

In the figure, thumbnail pictures denoted by reference notations (a), (b) and (c) are stored in menu.tdt1 while thumbnail pictures denoted by reference notations (x), (y) and (z) are stored in menu.tdt2.

In menu.tidx, two values, namely, thumbnail_index(A, B, C) and ref_to_tn_block_id_1(0, 1, 3), are assigned to each of the thumbnail pictures (a), (b) and (c). In addition, also in menu.tidx, two values, namely, thumbnail_index(X, Y, Z) and ref_to_tn_block_id_2(0, 2, 3), are assigned to each of the thumbnail pictures (x), (y) and (z). In menu.tdt1, the thumbnail pictures (a), (b) and (c) are stored as tn_block with tn_block_id of 0, 1 and 3, respectively corresponding to each ref_to_tn_block_id_1. In menu.tdt2, on the other hand, the thumbnail pictures (x), (y) and (z) are stored as tn_ block with tn_block_id of 0, 2 and 3, respectively corresponding to each ref_to_tn_block_id_2. In this way, thumbnail pictures can be managed with ease even if encrypted thumbnail pictures coexist with unencrypted thumbnail pictures.

The array of tn_block stored in menu.tdt1 or menu.tdt2 may includes an unused block such as tn_block with tn_block_id of 2 in menu.tdt1 and tn_block with tn_block_id of 1 in menu.tdt2. If a thumbnail is deleted, for example, thumbnail_index corresponding to the deleted thumbnail is also deleted from menu.tidx and, if no other changes are made to the thumbnail-picture file, an unused tn_block is merely resulted in on the array of tn_block.

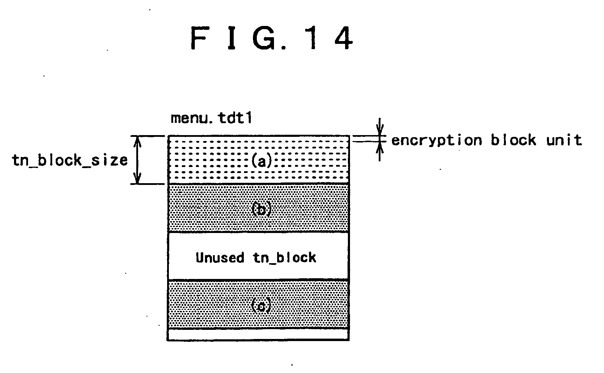

Fig. 14 is an explanatory diagram showing a method of encrypting a thumbnail picture and storing the encrypted picture in a file, that is, menu.tdt1 shown in Fig. 13. As shown in Fig. 14, a tn_block is divided into an integer number of encryption blocks, which are each to be used as a unit in a process to encrypt the tn_block. As an encryption method, it.is possible to adopt a technique such as DES, Triple-DES or AES. A process to encrypt a tn_block is thus closed for the tn_block. Therefore, in an operation to read out any arbitrary thumbnail picture from a thumbnail-picture file, it is necessary only to decrypt an encrypted tn_block containing the thumbnail picture. As a result, the amount of data processing can be minimized.

The following description explains the syntax and the semantics of a file used for storing information on a thumbnail.

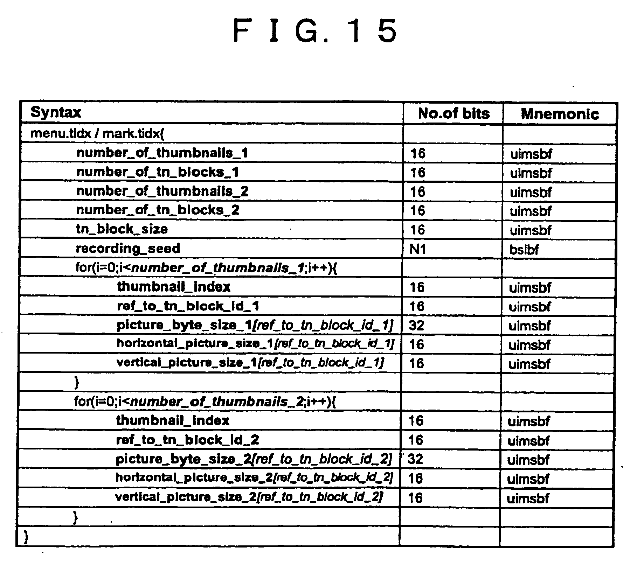

'menu.tidx' and 'mark.tidx' have the same syntactical structure. A typical syntactical structure of menu.tidx and mark.tidx is shown in Fig. 15.

In the case of menu.tidx, number_of_thumbnails_1 is the number of thumbnail pictures stored in menu.tdt1. In the case of mark.tidx, on the other hand, number of thumbnails_1 is the number of thumbnail pictures stored in mark.tdt1.

In the case of menu.tidx, number_of_tn_blocks_1 is the number of tn_block stored in menu.tdt1. In the case of mark.tidx, on the other hand, number_of_tn_blocks_1 is the number of tn_block stored in mark.tdt1.

In the case of menu.tidx, number-of-thumbnails_2 is the number of thumbnail pictures stored in menu.tdt2. In the case of mark.tidx, on the other hand, number of thumbnails_2 is the number of thumbnail pictures stored in mark.tdt2.

In the case of menu.tidx, number_of_tn_blocks_2 is the number of tn_block stored in menu.tdt2. In the case of mark.tidx, on the other hand, number_of_tn_blocks_2 is the number of tn_block stored in mark.tdt2.

In the case of menu.tidx, tn_block_size is the size of tn_block in menu.tdt1 and menu.tdt2. In the case of mark.tidx, on the other hand, tn_block_size is the size of tn_block in mark.tdt1 and mark.tdt2. The size is expressed in terms of units, which are each 1,024 bytes in length. In the case of tn_block_size of 16, for example, the size of tn_block is thus 16 * 1,024 bytes. A thumbnail picture must be stored in one tn_block.

In the case of menu.tidx, recording_seed is a random number used in a process to encrypt data to be stored in menu.tdt1. In the case of mark.tidx, on the other hand, recording_seed is a random number used in a process to encrypt data to be stored in mark.tdt1. In a process carried out by a recorder to create the menu.tdt1 file on a disc for the first time, the recorder generates recording_seed and stores it in menu.tidx. Further, in a process carried out by a recorder to create the mark.tdt1 file on a disc for the first time, the recorder generates recording_seed and stores it in menu.tidx.

When thumbnail_index is included in a loop of a for statement using number_of_thumbnails_1 as a variable, thumbnail_index shows an index number for ref_to_tn_block_id_1, which follows thumbnail_index in the loop. By the same token, when thumbnail_index is included in a loop of a for statement using number_of_thumbnails_2 as a variable, thumbnail_index shows an index number for ref_to_tn_block_id_2, which follows thumbnail_index in the loop. As thumbnail_index, a value of 0xFFFF cannot be used. In the case of menu.tidx, thumbnail_index is referenced by ref_to_menu_thumbnail_index in UIAppInfoVolume( ) and PlayListmark ( ). In the case of mark.tidx, on the other hand, thumbnail_index is referenced by ref_to_menu_thumbnail_index in PlayListmark( ) and ClipMark( ). In menu.tidx, thumbnail_index must not appear with the same value more than once. By the same token, in mark.tidx, thumbnail_index must not appear with the same value more than once.

In the case of menu.tidx, ref_to_tn_block_id_1 indicates a tn_block in menu.tdt1. The tn_block indicated by ref_to_tn_block_id_1 contains a thumbnail picture for thumbnail_index used as an index number of ref_to_tn_block_id_1.

In the case of mark.tidx, on the other hand, ref_to_tn_block_id_1 indicates a tn_block in mark.tdt1. The tn_block indicated by ref_to_tn_block_id_1 contains a thumbnail picture for thumbnail_index used as an index number of ref_to_tn_block_id_1.

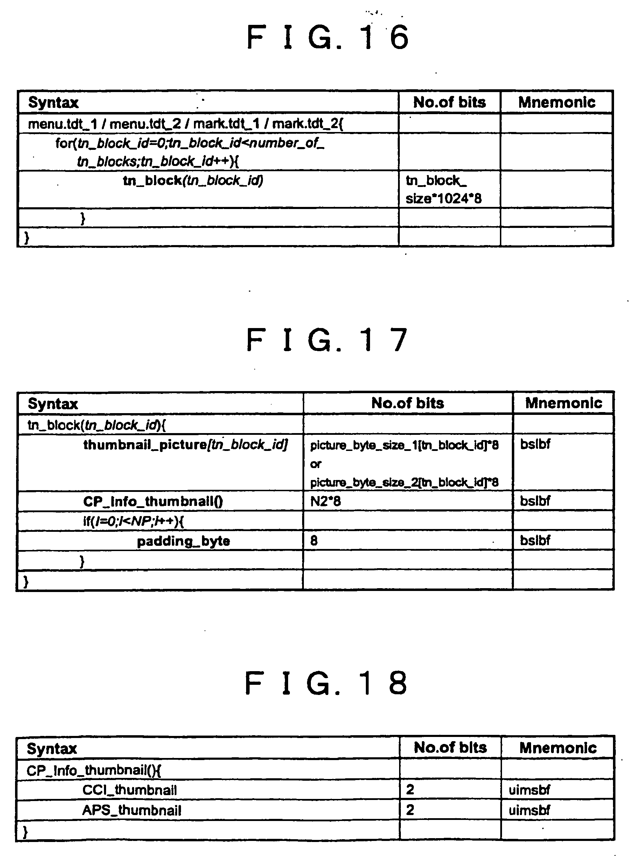

picture_byte_size_1 [ref_to_tn_block_id_1] is the data length of a thumbnail picture stored in a tn_block indicated by ref_to_tn_block_id_1. picture_byte_size_1 [ref_to_tn_block_id_1] expresses the data length in terms of bytes. The value of picture_byte_size_1 [ref_to_tn_block_id_1] must not be greater than (1,024 * tn block size - N1) where N1 is a quantity to be described later by referring to Fig. 17. That is to say, the recorder must encode the thumbnail picture to produce an encoded picture with a data length not greater than (1,024 * tn_block_size - N1) bytes.

horizontal_picture_size_1 [ref_to_tn_block_id_1] is the number of pixels arranged in the horizontal direction in a thumbnail picture stored in a tn_block indicated by ref_to_tn_block_id_1.

vertical_picture_size_1 [ref_to_tn_block_id_1] is the number of pixels arranged in the vertical direction in a thumbnail picture stored in a tn_block indicated by ref_to_tn_block_id_1.

In the case of menu.tidx, ref_to_tn_block_id_2 indicates a tn_block in menu.tdt2. The tn_block indicated by ref_to_tn_block_id_2 contains a thumbnail picture for thumbnail_index used as an index number of ref_to_tn_block_id_2. In the case of mark.tidx, on the other hand, ref_to_tn_block_id_2 indicates a tn_block in mark.tdt2. The tn_block indicated by ref_to_tn_block_id_2 contains a thumbnail picture for thumbnail_index used as an index number of ref_to_tn_block_id_2.

picture_byte_size_2 [ref_to_tn_block_id_2] is the data length of a thumbnail picture stored in a tn_block indicated by ref_to_tn_block_id_2. picture_byte_size_2 [ref_to_tn_block_id_2] expresses the data length in terms of bytes. The value of picture_byte_size_2 [ref_to_tn_block_id_2] must not be greater than (1,024 * tn_block_size - N1) where N1 is a quantity to be described later by referring to Fig. 17. That is to say, the recorder must encode the thumbnail picture to produce an encoded picture with a data length not greater than (1,024 * tn_block_size - N1) bytes.

horizontal_picture_size_2 [ref_to_tn_block_id_2] is the number of pixels arranged in the horizontal direction in a thumbnail picture stored in a tn_block indicated by ref_to_tn_block_id_2.

vertical_picture_size_2 [ref_to_tn_block_id_2] is the number of pixels arranged in the vertical direction in a thumbnail picture stored in a tn_block indicated by ref_to_tn_block_id_2.

Fig. 16 is a diagram showing the syntactical structure of the menu.dtl, menu.tdt2, mark.tdt1 and mark.tdt2 files. That is to say, the menu.tdt1 menu.tdt2, mark.tdt1 and mark.tdt2 files have the same syntactical structure.

tn_block (tn_block_id) is a particular block in the array of tn_block. The particular block is indicated by the parameter tn_block_id.

In the case of menu.tdt1 the value of tn_block_id is referenced by using ref_to_tn_block_id_1 in menu.tidx.

In the case of menu.tdt2, the value of tn_block_id is referenced by using ref_to_tn_block_id_2 in menu.tidx.

In the case of mark.tdt1, the value of tn_block_id is referenced by using ref_to_tn_block_id_1 in mark.tidx.

In the case of mark.tdt2, the value of tn_block_id is referenced by using ref_to_tn_block_id_2 in mark.tidx.

Fig. 17 is a diagram showing the syntactical structure of tn_block(tn_block_id).

thumbnail_picture [tn_block_id] is an area for storing a thumbnail picture indicated by the value of tn_block_id. The first byte of the thumbnail picture must coincide with the first byte of the thumbnail_picture [tn_block_id] area.

CP_Info_thumbnail( ) is information with a length of N1 bytes. This information is content protection information of the thumbnail picture stored in the thumbnail_picture [tn_block_id] area. Details of CP_Info_thumbnail( ) will be described later.

padding_byte is 1-byte data having any arbitrary value. The value of NP is determined as follows:

$$NP = tn\_block\_size * 1{,}024 - picture\_byte\_size$$
$$[tn\_block\_id] - N1$$

Fig. 18 is a diagram showing the syntactical structure of CP_Info_thumbnail( ).

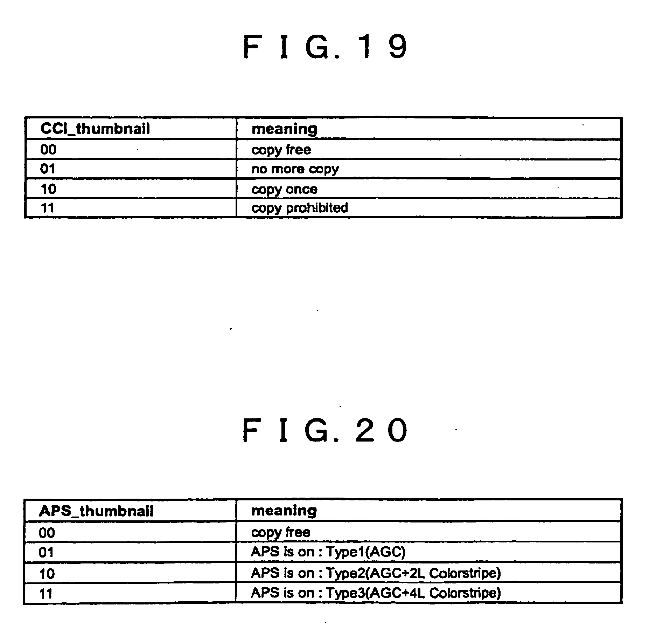

CCI_thumbnail is copy generation management information of a thumbnail picture. Values of CCI_thumbnail have meanings shown in Fig. 19. As shown in the figure, a value of 00 means 'Copy Free', a value of 01 means 'No More Copy', a value of 10 means 'Copy Once' and a value of 11 means 'Copy Prohibited'.

APS_thumbnail is analog copy protection_information used in an operation to output a thumbnail picture as an analog video signal. Values of APS_thumbnail have meanings shown in Fig. 20. APS definitions are each described in a document with a title of Default Settings of the Macrovision Anti-taping Process for DVD products, Revision 1.0, July 5, 1997. It is to be noted that 2L/4L Colorstripe can be applied only to the case of an NTSC analog output.

Since the menu.tdt1 and mark.tdt1 files each contain encrypted data, the following two effects are exhibited:

(1): The contents of CP_Info_thumbnail( ) can be prevented from being falsified by a user having an evil intention.

(2): It is possible to take a measure for preventing a copy of a thumbnail picture from being reproduced even if the copy has been obtained by copying the thumbnail picture, which has CCI_thumbnail with a value meaning 'no More Copy', to another recording medium in a bit-by-bit copy operation.

In the description given so far, files for storing menu-thumbnail pictures are classified into a file for storing encrypted thumbnail pictures and a file for storing unencrypted thumbnail pictures. This classification also applies to files for storing mark-thumbnail pictures. Next, as another implementation, the following description explains a format allowing an encrypted thumbnail portion and an unencrypted thumbnail portion accommodated in a single file for storing menu-thumbnail pictures to switch therebetween.

In this case, menu-thumbnail pictures are stored in a single file named menu.tdat and mark-thumbnail pictures are stored in a single file named mark.tdat. That is to say, menu.tdt1 and menu.tdt2 in the file structure shown in Fig. 8 are replaced by the single file named menu.tdat while mark.tdt1 and mark.tdt2 are replaced by the single file named mark.tdat.

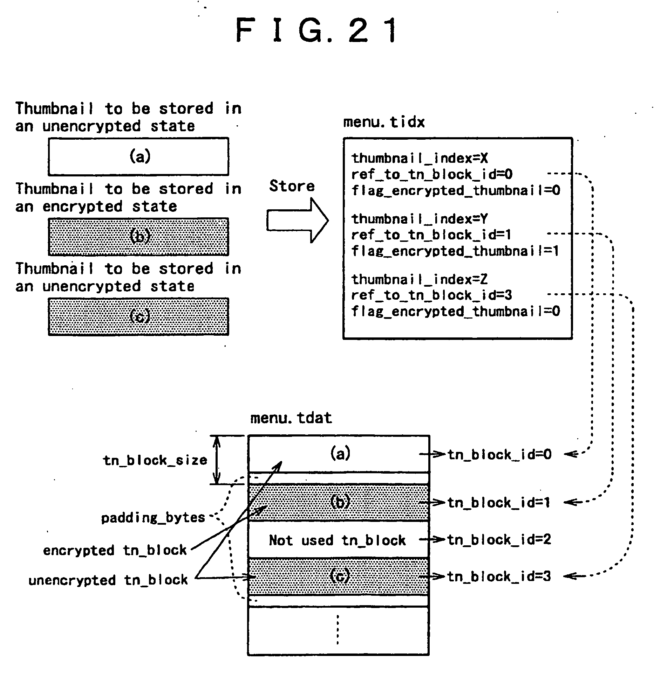

A method of using tn_block in this case is shown in Fig. 21.

As shown in the figure, thumbnail pictures (a), (b) and (c) are stored in menu.tdat. The thumbnail picture (b) is a picture stored as encrypted data. menu.tidx contains three values, namely, thumbnail_index(X, Y, Z), ref_to_tn_block_id(0, 1, 3) and flag_encrypted_thumbnail (0, 1, 0), for each of the thumbnail pictures (a), (b) and (c). The thumbnail pictures (a), (b) and (c) are stored in tn_block indicated by ref_to_tn_block_id(0, 1, 3) respectively in menu.tdat.

An unused tn_block may exist on the array of tn_block of menu.tdat. If a thumbnail is deleted, for example, thumbnail_index corresponding to the deleted thumbnail is also deleted from menu.tidx and, if no other changes are made to the thumbnail-picture file, an unused tn_block is merely resulted in on the array of tn_block.

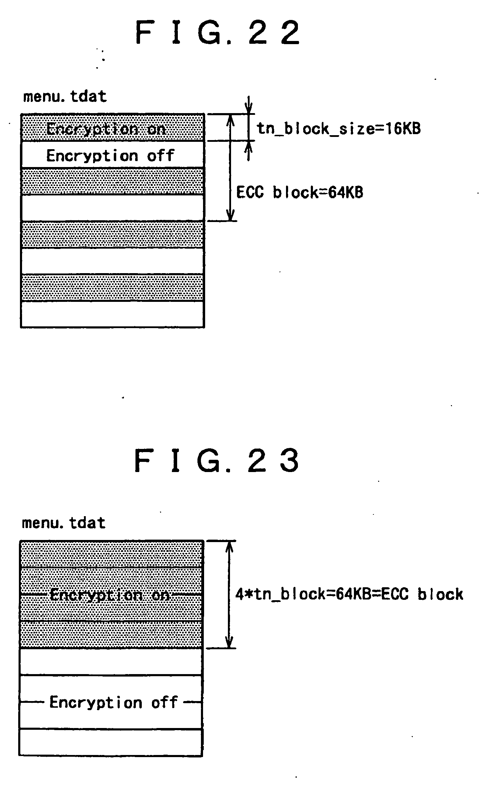

In the case of the format allowing an encrypted thumbnail portion and an unencrypted thumbnail portion accommodated in a single file for storing menu-thumbnail pictures to switch therebetween, there are two methods of switching from the encrypted thumbnail portion to the unencrypted thumbnail portion and vice versa. The two methods are described by referring to Figs. 22 and 23 as follows.

Fig. 22 is a diagram showing one of the methods of switching from the encrypted thumbnail portion to the unencrypted thumbnail portion and vice versa on boundaries of tn_block units. On the other hand, Fig. 23 is a diagram showing the other method of switching from the encrypted thumbnail portion to the unencrypted thumbnail portion and vice versa on boundaries of units each consisting of a plurality of tn_block. Assume for example that the size of tn_block is 16 KB and an ECC block is 64 KB. In the case of the latter method of switching from the encrypted thumbnail portion to the unencrypted thumbnail portion and vice versa, the switching unit has a size of 64 KB.

The following description explains the syntax of a thumbnail-picture file having a format allowing an encrypted thumbnail portion and an unencrypted thumbnail portion accommodated in the single thumbnail-picture file for storing menu-thumbnail pictures to switch therebetween. The description also applies to a file for storing mark-thumbnail pictures as well.

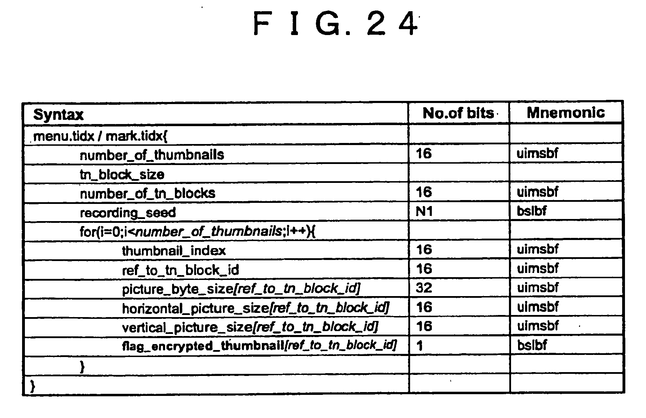

'menu.tidx' and 'mark.tidx' have the same syntactical structure. Fig. 24 is a diagram showing a typical syntactical structure of 'menu.tidx' and 'mark.tidx'.

In the case of menu.tidx, number-of-thumbnails is the number of thumbnail pictures stored in menu.tdat. In the case of mark.tidx, on the other hand,
number_of_thumbnails is the number of thumbnail pictures stored in mark.tdat.

In the case of menu.tidx, tn_block_size is the size of one tn_block in menu.tdat. In the case of mark.tidx, on the other hand, tn_block_size is the size of one tn_block in mark.tdat.

In the case of menu.tidx, number_of_tn_blocks is the number of tn_block included in menu.tdat. In the case of mark.tidx, on the other hand, number_of_tn blocks is the number of tn_block included in mark.tdat.

In the case of menu.tidx, recording_seed is a random number used in a process to encrypt data to be stored in menu.tdat. The random number is computed by adoption of a predetermined method. In the case of mark.tidx, on the other hand, recording_seed is a random number used in a process to encrypt data to be stored in mark.tdat. By the same token, the random number is computed by adoption of a predetermined method.

thumbnail_index shows an index number for ref_to_tn_block_id, which follows thumbnail_index. As thumbnail_index, a value of 0xFFFF cannot be used. In the case of menu.tidx, thumbnail_index is referenced by ref_to_menu_thumbnail_index in UIAppInfoVolume( ) and PlayListmark( ). In the case of mark.tidx, on the other hand, thumbnail_ index is referenced by ref_to_menu_thumbnail_index in PlayListmark( ) and ClipMark( ). In menu.tidx, thumbnail_index must not appear with the same value more than once. By the same token, in mark.tidx, thumbnail_index must not appear with the same value more than once.

In the case of menu.tidx, ref_to_tn_block_id indicates a tn_block in menu.tdat. The tn_block indicated by ref_ to_tn_block_id contains a thumbnail picture for thumbnail_index used as an index number of ref_to_tn_block_id. In the case of mark.tidx, on the other hand, ref_to_tn_block_id indicates a tn_block in mark.tdat. The tn_block indicated by ref_to_tn_block_id contains a thumbnail picture for thumbnail_index used as an index number of ref_to_tn_block_id.

picture_byte_size [ref_to_tn_block_id] is the data length of a thumbnail picture stored in a tn_block indicated by ref_to_tn_block_id. picture_byte_size [ref_to_tn_block_id] expresses the data length in terms of bytes.

horizontal_picture_size [ref_to_tn_block_id] is the number of pixels arranged in the horizontal direction in a thumbnail picture stored in a tn_block indicated by ref_to_tn_block_id.

vertical_picture_size [ref_to_tn_block_id] is the number of pixels arranged in the vertical direction in a thumbnail picture stored in a tn_block indicated by ref_to_tn_block_id.

flag_encrypted_thumbnail [ref_to_tn_block_id] is a flag indicating whether a thumbnail picture stored in a tn_ block pointed to by ref_to_tn_block_id is a picture encrypted before being recorded or a picture recorded without being encrypted.

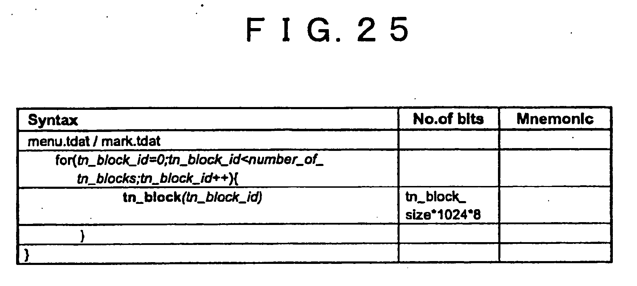

Fig. 25 is a diagram showing a syntactical structure common to the 'menu.tdat' and 'mark.tdat' files. That is to say, the 'menu.tdat' and 'mark.tdat' files have the same syntactical structure.

tn_block(tn_block_id) is a particular block in the array of tn_block. The particular block is indicated by the parameter tn_block_id. In the case of menu.tdat, the value of tn_block_id is referenced by using ref_to_tn_block_id in menu.tidx. In the case of mark.tdt, on the other hand, the value of tn_block_id is referenced by using ref_to_tn block_ id in mark.tidx.

The contents of tn_block(tn_block_id) are the same as the contents explained earlier by referring to Figs. 16 and 17.

The descriptions given so far have explained three methods of managing encrypted and unencrypted thumbnails by using databases. The methods each have the following effects. (1) : Thumbnail-picture files are classified into a file for storing encrypted thumbnail pictures and a file for storing unencrypted thumbnail pictures. Refer to Figs. 13 and 14.

Since encryption ON/OFF switching is not applied to the thumbnail-picture files, in a reproduction process of reading out data from such a file, it is not necessary to apply decryption ON/OFF switching so that the decryption process can be simplified.

(2): There is also provided a format allowing an encrypted thumbnail portion and an unencrypted thumbnail portion accommodated in a single file for storing menu-thumbnail pictures to switch therebetween. In this case, it is possible to switch from the encrypted thumbnail portion to the unencrypted thumbnail portion and vice versa on boundaries of tn_ block units. Refer to Figs. 21 and 22.

Database management to distinguish encrypted and unencrypted thumbnails from each other is easy to implement even if only a single thumbnail-picture file exists. By switching from the encrypted thumbnail portion to the unencrypted thumbnail portion and vice versa on boundaries of tn_block units, which are smallest units, data can be recorded onto the disc in a manner not wasting the storage area of the disc.

(3): There is also provided a format allowing an encrypted thumbnail portion and an unencrypted thumbnail portion accommodated in a single file for storing menu-thumbnail pictures to switch therebetween. In this case, it is possible to switch from the encrypted thumbnail portion to the unencrypted thumbnail portion and vice versa on boundaries of units each consisting of a plurality of tn_block. Refer to Fig. 23.

Database management to distinguish encrypted and unencrypted thumbnails from each other is easy to implement even if only a single thumbnail-picture file exists. By making the size of the switching unit, which consists of a plurality of tn_block, equal to the size of an ECC block, in a reproduction process of reading out data from such a file, it is not necessary to apply decryption ON/OFF switching so that the decryption process can be simplified.

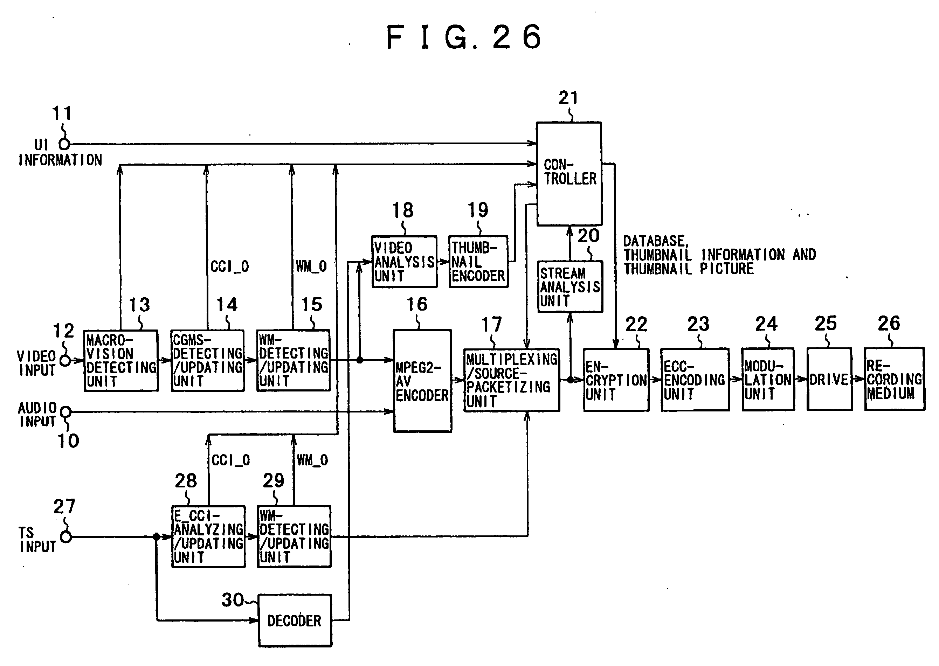

Fig. 26 is a block diagram showing the configuration of a recording apparatus for recording an AV stream as well as encoding pictures representing the AV stream and pictures at mark points on the AV stream into thumbnails and recording the thumbnails.

First of all, the following description explains a case in which an AV stream obtained as a result of a self-encoding process carried out on a video input and an audio input received from terminals 12 and 16 respectively is recorded. A macrovision detection unit 13 detects an analog Copy Production signal (APS) of an input video by adoption of a predetermined method and imposes a recording restriction on video information. Only in the case of input video information not including an APS, can the video information be recorded. That is to say, the video information can be recorded only if the APS has copy generation information with a value of 00 meaning Copy Free. If the input video information does not include an APS, the macrovision detection unit 13 passes on the input video information to a CGMS-detecting/updating unit 14. The CGMS-detecting/updating unit 14 analyzes a CGMS (CGMS-A or CGMS-D) of the input video information by adoption of a predetermined method, and supplies CCI (denoted by reference notation CCI_o shown in the figure) of the AV stream being recorded to a controller 21. In addition, the CGMS-detecting/updating unit 14 passes on the input video information to a WM (Water Mark)-detecting/updating unit 15. The WM-detecting/updating unit 15 analyzes the watermark of the input video information by adoption of a predetermined method and supplies the watermark to be recorded (denoted by reference notation WM_o shown in the figure) to the controller 21. The WM-detecting/updating unit 15 passes on the input video information to an MPEG2 AV encoder 16 and a video analysis unit 18.

The MPEG2 AV encoder 16 encodes the input video and audio signals, supplying a video stream and an audio stream to a multiplexing/source-packetizing unit 17.

On the basis of CCI_o and WM_o, the controller 21 determines a value of E_CCI (Embedded CCI) encoded in streams multiplexed by the multiplexing/source-packetizing unit 17, supplying the value to the multiplexing/source-packetizing unit 17. The multiplexing/source-packetizing unit 17 multiplexes the video stream and the audio stream, supplying an AV stream to an encryption unit 22 and a stream analysis unit 20.

The encryption unit 22 encrypts the AV stream by adoption of a method determined in advance and supplies an encrypted AV stream to an ECC-encoding unit 23. After being subjected to processes carried out by the ECC-encoding unit 23, a modulation unit 24 and a drive 25, the AV stream is recorded onto a recording medium 26 as an AV-stream file.

This recording apparatus records not only the AV-stream file, but also application database information relevant to the file onto the recording medium 26. The application database information includes the info.dvr file, information on PlayList and Clip, a thumbnail-information file and a thumbnail-picture file. The application database information is generated by the controller 21. Information input to the controller 21 includes characteristic information of video information supplied by the video analysis unit 18, characteristic information of the AV stream supplied by the stream analysis unit 20 and a command entered by the user via a terminal 11.

The characteristic information of video information supplied by the video analysis unit 18 is automatically generated by this recording apparatus. The video analysis unit 18 analyzes the content of the input video information and generates information related to pictures at mark points. The pictures are characteristic pictures included in the input video information. Examples of the mark points are the program start point of the input video information, scene-change point, CM start and end points. In addition, a picture at the first mark point of the input video information can also be used as a representative picture of the video information (or a representative picture of PlayList). The video analysis unit 18 supplies timestamps (mark positions) each pointing to a picture at a mark point in the video information to the controller 21. The thumbnail encoder 19 encodes a picture of each mark point into a thumbnail picture and supplies the thumbnail picture to the controller 21. The controller 21 stores the timestamp of each mark point, CCI_o and WM_o for a picture of each mark point and a thumbnail picture of the picture of each mark point in a memory by associating the timestamp of each mark point, CCI_o and WM_o for a picture of each mark point and a thumbnail picture of the picture of each mark point with each other. In addition, on the basis of CCI_o and WM_o for a picture of each mark point, the controller 21 determines the value of CCI_thumbnail of CP_Info_thumbnail( ) described above by adoption of a predetermined method. CP_Info_thumbnail( ) is shown in Figs. 17 and 18 whereas CCI_thumbnail is shown in Fig. 19.

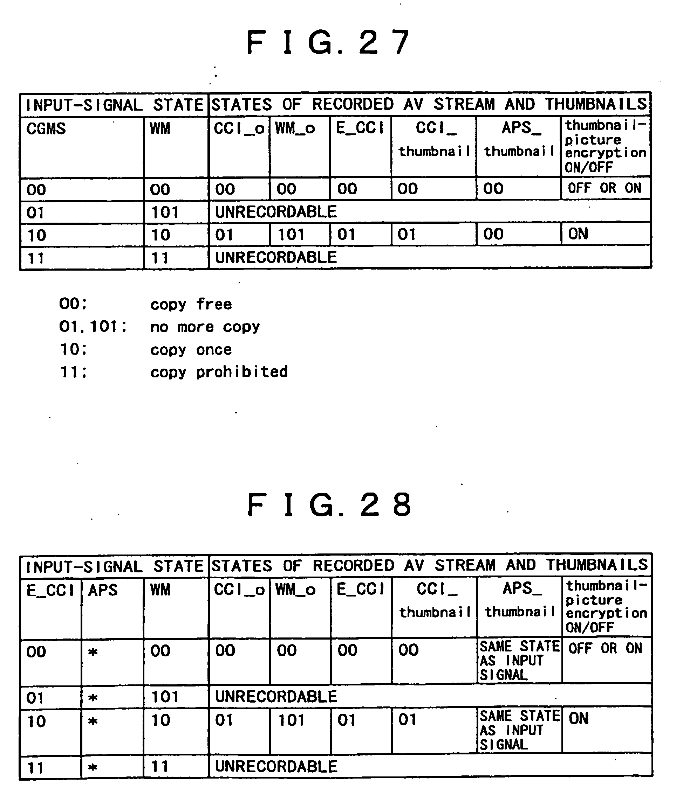

Fig. 27 is a diagram showing complete copy control processing for a case in which an AV stream obtained as a result of a self-encoding process carried out on a video input is recorded.

An AV stream is recorded in accordance with the copy protection type of the input signal. A thumbnail is also recorded in accordance with the copy protection type of the input signal. To put it in detail, in the case of a 'Copy Free' input signal, a thumbnail can be recorded in the same way as the AV stream. In this case, CCI_thumbnail or APS_thumbnail is also treated as 'Copy Free' information. At that time, while a thumbnail picture does not need to be encrypted, it can be encrypted.

In the case of a 'No More Copy' or 'Copy Prohibited' input signal, a thumbnail picture cannot be recorded. In the case of a 'Copy Once' input signal, the status of CCI_thumbnail is changed to 'No More Copy'.

In the case of 'No More Copy' CCI_thumbnail of a thumbnail picture, it is necessary to encrypt the thumbnail. In the case of 'Copy Free' CCI_thumbnail of a thumbnail picture, it is not necessary to encrypt the thumbnail.

The controller 21 creates application database information related to a thumbnail and, on the basis of the syntaxes described above, stores the application database information in the thumbnail-information file, the thumbnail-picture file and other files such as the info.dvr file, the PlayList file and the Clip-information file. The controller 21 then supplies these pieces of file information to the encryption unit 22. If it is necessary to encrypt the thumbnail, the encryption unit 22 encrypts the pieces of file information in accordance with the method explained earlier. The encryption unit 22 supplies the pieces of file information to the ECC-encoding unit 23. After being subjected to processes carried out by the ECC-encoding unit 23, the modulation unit 24 and the drive 25, the pieces of file information are recorded onto the recording medium 26.

The following description explains a process to record a transport stream (TS) input received through a terminal 27. An E_CCI (Embedded CCI)-analyzing/updating unit 28 analyzes encoded E_CCI (Embedded CCI) included in the input TS by adoption of a predetermined method and supplies CCI of the AV stream being recorded to the controller 21. The CCI of the AV stream being recorded is denoted by reference notation CCI_o in Fig. 26. In addition, the E_CCI-analyzing/updating unit 28 supplies the input TS to a WM-detecting/updating unit 29. The WM-detecting/updating unit 29 analyzes a watermark of the input video by adoption of a predetermined method and supplies the watermark of the AV stream being recorded to the controller 21. The watermark supplied to the controller 21 is denoted by reference notation WM_o in Fig. 26. In addition, the WM-detecting/updating unit 29 passes on the input TS to the multiplexing/ source-packetizing unit 17. The multiplexing/source-packetizing unit 17 converts the input TS into a stream comprising an array of source packets, supplying the stream to the stream analysis unit 20 and the encryption unit 22. The encryption (scrambling) unit 22 encrypts the input AV stream by adoption of a method determined in advance and supplies the encrypted stream to the ECC-encoding unit 23. After being subjected to processes carried out by the ECC-encoding unit 23, the modulation unit 24 and the drive 25, the stream is recorded onto the recording medium 26 as an AV-stream file.

In addition, the input TS received from the terminal 27 is also supplied to a decoder 30. The decoder 30 decodes the video stream of the input TS and supplies video information obtained as a result of the decoding process to the video analysis unit 18. The processing carried out by the video analysis unit 18 and the thumbnail encoder 19 is the same as the self-encoding process carried on the input video as described above.

The stream analysis unit 20 analyzes content protection information included in the input stream. The content protection information includes DTCP_descriptor. Then, the stream analysis unit 20 extracts analog copy protection information (APS) and supplies the APS to the controller 21. Subsequently, APS_thumbnail of the thumbnail picture of each picture is set at the same value as the APS for a mark-point picture of the input stream. The value of CCI_thumbnail is determined by the controller 21 in the same way as the self-encoding process carried on the input video as described above.

Fig. 28 is a diagram showing complete copy control processing for a case in which an input TS is recorded.

The processing shown in Fig. 28 is basically the same as that shown in Fig. 27. In the case of the processing shown in Fig. 28, however, the copy protection type of APS_thumbnail of a thumbnail picture is treated like the copy protection type of an input signal in the processing shown in Fig. 27.

To put it in detail, in the case of 'No More Copy' CCI_thumbnail of a thumbnail picture, it is necessary to encrypt the thumbnail. In the case of 'Copy Free' CCI_thumbnail of a thumbnail picture, on the other hand, it is not necessary to encrypt the thumbnail.

The controller 21 creates application database information related to a thumbnail and, on the basis of the syntaxes described above, stores the application database information in the thumbnail-information file, the thumbnail-picture file and other database files such as the info.dvr file, the PlayList file and the Clip-information file. The controller 21 then supplies these pieces of file information to the encryption unit 22. If it is necessary to encrypt the thumbnail, the encryption unit 22 encrypts the pieces of file information in accordance with the method explained earlier. The encryption unit 22 then supplies the pieces of file information to the ECC-encoding unit 23. After being subjected to processes carried out by the ECC-encoding unit 23, the modulation unit 24 and the drive 25, the pieces of file information are recorded onto the recording medium 26.

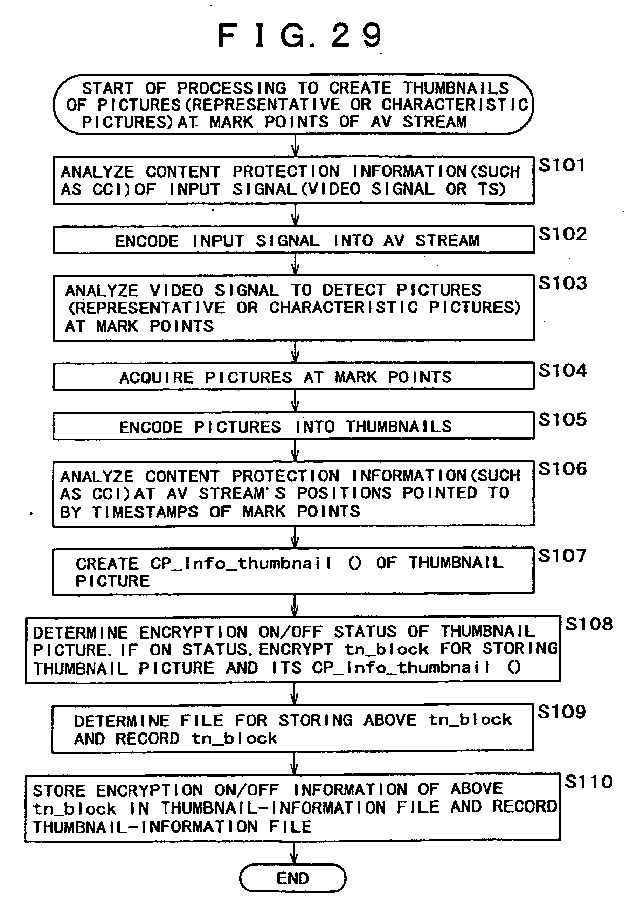

Fig. 29 shows a flowchart representing a process to record an AV stream, encode the representative and characteristic pictures of the AV stream into thumbnails and record the thumbnails onto a disc.

At a first step S101, content protection information (such as CCI) of an input signal, which can be video information or a TS, is analyzed. This analysis is carried out by the macrovision detection unit 13, the CGMS-detecting/ updating unit 14, the WM-detecting/updating unit 15, the E_CCI-analyzing/updating unit 28 or the WM-detecting/updating unit 29.

Then, at the next step S102, the input signal is converted into an AV stream. This conversion processing is carried out by the MPEG2 AV encoder 16 or the multiplexing/source-packetizing unit 17.

Subsequently, at the next step S103, the video analysis unit 18 analyzes the video information to detect pictures at mark points, that is, representative and characteristic pictures.

Then, at the next step S104, the video analysis unit 18 acquires the pictures at mark points.

Subsequently, at the next step S105, the thumbnail encoder 19 encodes each of the pictures at mark points into a thumbnail picture.

Then, at the next step S106, the controller 21 analyzes content protection information (such as CCI) at a position on the AV stream. The position is a position pointed to by the timestamp of each mark point.

Subsequently, at the next step S107, the controller 21 creates CP_Info_thumbnail( ) of a thumbnail picture. To put it concretely, as described before, the controller 21 determines the values of CCI_thumbnail shown in Fig. 19 and APS_thumbnail shown in Fig. 20.

Then, at the next step S108, the controller 21 makes a decision as to whether to turn on or turn off encryption of a thumbnail picture. If the encryption is turned on, the encryption unit 22 encrypts tn_block containing the thumbnail picture and CP_Info_thumbnail( ) of the thumbnail picture.

Subsequently, at the next step S109, the controller 21 determines a file for storing encrypted tn_block and records tn_block onto the recording medium 26. The concrete recording process is carried out by the ECC-encoding unit 23, the modulation unit 24 and the drive 25.

Then, at the next step S110, the controller 21 stores information on the encryption ON/OFF status of tn_block in the thumbnail-information file and records the thumbnail-information file onto the recording medium 26. The concrete recording process is carried out by the ECC-encoding unit 23, the modulation unit 24 and the drive 25.

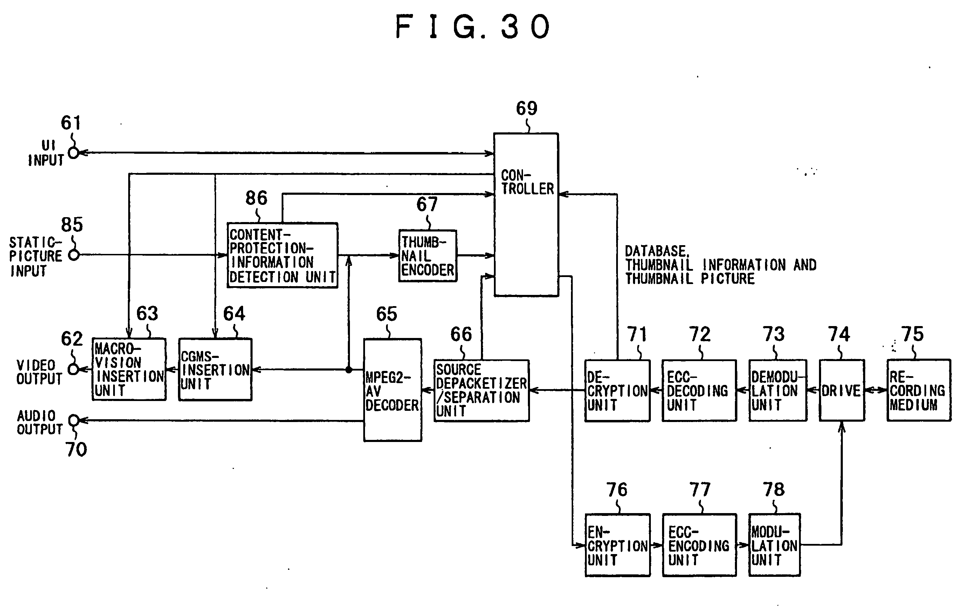

Fig. 30 is a block diagram showing the configuration of a recording apparatus for adding a thumbnail of a picture specified by the user to a recorded AV stream.

An application database read out by the drive 74 from a recording medium (a.disc) 75 is subjected to processes carried out by a demodulation unit 73, an ECC decoding unit 72 and a decryption unit 71 before being supplied to a controller 69. The controller 69 creates a menu screen explaining data recorded on the recording medium 75, and displays the menu screen on a monitor not shown in the figure. The user selects PlayList the user wants to reproduce via a UI (User Interface) of a terminal 61. The controller 69 issues a command to read out an AV stream, which is required for reproduction of PlayList selected by the user, from the recording medium 75.

An AV-stream file read out by the drive 74 from the recording medium 75 is subjected to processes carried out by the demodulation unit 73, the ECC decoding unit 72 and the decryption unit 71 before being supplied to a source depacketizer/separation unit 66. A video stream separated by the source depacketizer/separation unit 66 is decoded by an MPEG2 AV decoder 65 to produce video information. The video information is subjected to predetermined processes carried out by a CGMS insertion unit 64 and a macrovision insertion unit 63 before being output to a terminal 62 to be displayed on the monitor, which is not shown in the figure as mentioned above.

The user selects a scene the user wants to mark among those of reproduced video information by entering a command to the controller 69 by way of the UI input from a terminal 61. An example of such a scene is a scene the user likes.

A thumbnail picture to be recorded for a mark point can be created from a picture at the mark point or from a picture obtained from a personal computer or produced by using a digital still camera and taken into the recording apparatus by way of an external-input terminal.

In a process to create a thumbnail picture to be recorded for a mark point from a picture at the mark point, the controller 69 acquires a timestamp of a picture marked by the user from the source depacketizer/separation unit 66. Then, the picture at the mark point is acquired from the MPEG2 AV decoder 65 and supplied to a thumbnail encoder 67. The thumbnail encoder 67 encodes the thumbnail picture and supplies the encoded thumbnail picture to the controller 69. In addition, the source depacketizer/separation unit 66 fetches content protection information such as DTCP descriptor at a position on the AV stream, and supplies the content protection information to the controller 69. The position on the AV stream is a position pointed to by the timestamp of the mark point. The controller 69 analyzes the content protection information such as DTCP_descriptor to fetch CCI and analog copy protection information (APS). Then, CCI_thumbnail and APS_thumbnail of CP_Info_thumbnail( ) for the thumbnail picture corresponding to the picture at the mark point are set at the same values as respectively the CCI and APS described earlier.

The following description explains a process to create a thumbnail picture to be recorded for a mark point from a picture obtained from a personal computer or produced by using a digital still camera and taken into the recording apparatus by way of an external-input terminal. First of all, the controller 69 obtains a static picture from an external-input terminal 85. A content-protection-information detection unit 86 fetches content protection information such as a CGMS, an APS and a DTCP descriptor, supplying the fetched content protection information to the controller 69. The controller 69 analyzes the content protection information to fetch the CCI and analog protection information (the APS). Then, CCI_thumbnail and APS_thumbnail of CP_Info_thumbnail( ) for the thumbnail picture are set at the same values as respectively the CCI and APS described earlier. Subsequently, the static picture is supplied to the thumbnail encoder 67. The thumbnail encoder 67 encodes the thumbnail picture and supplies the encoded thumbnail picture to the controller 69.

In the case of 'No More Copy' CCI_thumbnail of a thumbnail picture, it is necessary to encrypt the thumbnail. In the case of 'Copy Free' CCI_thumbnail of a thumbnail picture, on the other hand, it is not necessary to encrypt the thumbnail.

The controller 69 creates application database information related to a thumbnail and, on the basis of the syntaxes described above, stores the application database information in the thumbnail-information file, the thumbnail-picture file and other files such as the info.dvr file, the PlayList file and the Clip-information file. The controller 69 then supplies these pieces of file information to the encryption unit 76. If it is necessary to encrypt the thumbnail, the encryption unit 76 encrypts the pieces of file information in accordance with the method explained earlier. The encryption unit 76 then supplies the pieces of file information to the ECC-encoding unit 77. After being subjected to processes carried out by the ECC-encoding unit 77, the modulation unit 78 and the drive 74, the pieces of file information are recorded onto the recording medium 75.

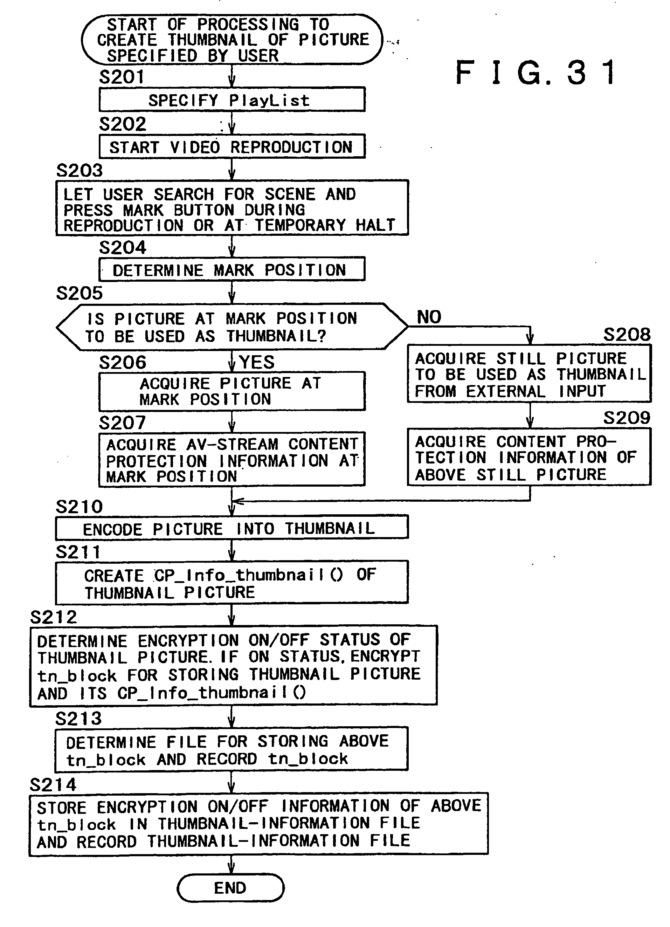

Fig. 31 shows a flowchart representing a process to add a thumbnail for a picture specified by the user to a recorded AV stream and record the thumbnail.

At the first step S201, the controller 69 receives PlayList to be reproduced. This PlayList is specified by the user via the UI.

Then, at the next step S202, the controller 69 issues a command to start video reproduction of the specified PlayList. The concrete reproduction processing involves the recording medium 75, the drive 74, the demodulation unit 73, the ECC decoding unit 72 and the decryption unit 71.

Subsequently, at the next step S203, the user searches the reproduced PlayList for a scene the user wants to mark. As the user presses a mark button in the course of the reproduction processing or at a temporary halt, the information on the scene is supplied to the controller 69 by way of the UI.

Then, at the next step S204, the controller 69 determines a mark position on the basis of the input information.

Subsequently, at the next step S205, the controller 69 asks the user a question as to whether to use a picture at a mark position as a thumbnail or a static picture to be acquired from the external-input terminal as the thumbnail. The question is displayed as a predetermined inquiry message. The answer to the question is obtained from the user as a response to the inquiry message. If a picture at a mark position as a thumbnail is to be used as a thumbnail, the flow of the processing goes on to a step S206. If a static picture acquired from the external-input terminal as the thumbnail is to be used as a thumbnail, on the other hand, the flow of the processing goes on to a step S208.

At the step S206, the source depacketizer/separation unit 66 acquires a picture at the mark position.

Then, at the next step S207, the source depacketizer/separation unit 66 acquires content protection information at the mark position on the AV stream.

If the answer to the question asked at the step S205 is a desire to use a static picture to be acquired from the external-input terminal as the thumbnail, at the step S208, the content-protection-information detection unit 86 acquires the static picture to be used as the thumbnail from the external-input terminal.

Then, at the next step S209, the content-protection-information detection unit 86 acquires the content protection information of the static picture.

Subsequently, at the next step S210, the thumbnail encoder 67 encodes the picture to be used as a thumbnail into a thumbnail picture.

Then, at the next step S211, the controller 69 creates CP_Info_thumbnail( ) of the thumbnail picture. To put it concretely, the controller 69 determines values of CCI_thumbnail and APS_thumbnail as described before.

Subsequently, at the next step S212, the controller 69 makes a decision as to whether to turn on or turn off encryption of the thumbnail picture. If the encryption is turned on, the encryption unit 76 encrypts tn_block containing the thumbnail picture and CP_Info_thumbnail( ) of the thumbnail picture.

Subsequently, at the next step S213, the controller 69 determines a file for storing encrypted tn_block and records tn_block onto the recording medium 75. The concrete recording process is carried out by the ECC-encoding unit 77, the modulation unit 78 and the drive 74.

Then, at the next step S214, the controller 69 stores information on the encryption ON/OFF status of tn_block in the thumbnail-information file and records the thumbnail-information file onto the recording medium 75.

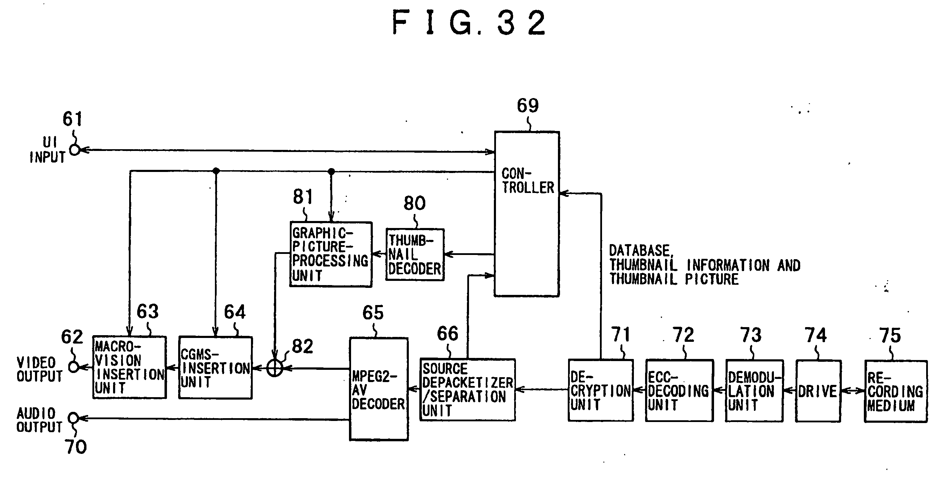

Fig. 32 is a block diagram showing the configuration of a reproduction apparatus for reproducing an AV stream as well as every representative picture and every characteristic picture of the AV stream.

An application database read out by the driver 74 from the recording medium 75 is subjected to processes carried out by the demodulation unit 73, the ECC decoding unit 72 and the decryption unit 71 before being supplied to the controller 69.

The controller 69 determines a thumbnail picture to be displayed to a video output. For example, the controller 69 determines the thumbnail of a representative picture of a certain PlayList.

The controller 69 reads out information on the thumbnail picture from the thumbnail-information file. From the information, the controller 69 identifies the thumbnail-picture file for storing the thumbnail picture and the encryption ON/OFF status of the thumbnail picture.

Then, the controller 69 reads out the data of the thumbnail picture from the thumbnail-picture file. If the thumbnail picture is an encrypted picture, the decryption unit 71 decrypts the encrypted thumbnail picture. In addition, the controller 69 acquires CP_Info_thumbnail( ) for the thumbnail picture being reproduced.

The controller 69 supplies the thumbnail picture to a thumbnail decoder 80, which then supplies a decoded picture to a graphic-picture-processing unit 81. The graphic-picture-processing unit 81 carries out a predetermined process to produce an output picture, which is then processed by a picture blender processing unit 82 before being supplied to a CGMS insertion unit 64.

The CGMS insertion unit 64 inserts a CGMS signal into the output picture. The CGMS signal conveys information with the same meaning as CCI_thumbnail of CP_Info_thumbnail( ) for the thumbnail picture. Then, a macrovision insertion unit 63 inserts an analog copy protection signal into the output picture. The analog copy protection signal conveys information with the same meaning as APS_thumbnail of CP_Info_thumbnail( ). Finally, a video is reproduced from a terminal 62.

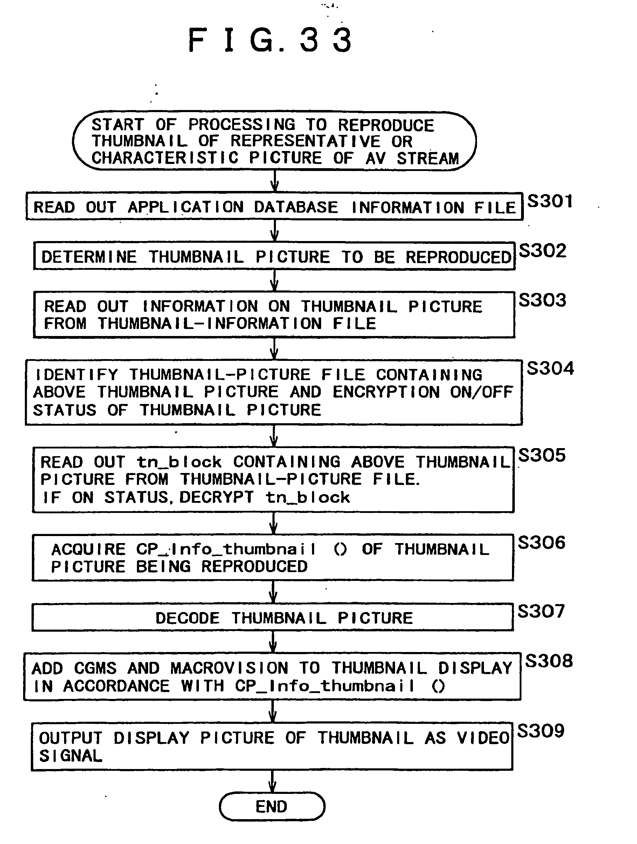

Fig. 33 shows a flowchart representing a reproduction process to reproduce thumbnails of representative and characteristic pictures of an AV stream.

At the first step S301, the controller 69 issues a command to read out an application database information file. The concrete processing to read out the application database information file from the recording medium 75 involves the drive 74, the demodulation unit 73, the ECC decoding unit 72 and the decryption unit 71.

Then, at the next step S302, the controller 69 determines a thumbnail picture to be reproduced on the basis of an input received from the UI.

Subsequently, at the next step S303, the controller 69 reads out information on the thumbnail picture from the thumbnail-information file.

Then, at the next step S304, the controller 69 acquires a thumbnail-picture file for storing the thumbnail picture and identifies the ON/OFF encryption status of the thumbnail picture.

Subsequently, at the next step S305, the controller 69 reads out tn_block for storing the thumbnail picture from the thumbnail-picture file. If tn_block is an encrypted block, the decryption unit 71 decrypts the block.

Then, at the next step S306, the controller 69 acquires CP_Info_thumbnail( ) of the thumbnail picture to be reproduced from the output of the source depacketizer/separation unit 66.

Subsequently, at the next step S307, the controller 69 supplies the thumbnail picture to the thumbnail decoder 80 and issues a command to the thumbnail decoder 80 to decode the thumbnail picture. The thumbnail picture is then supplied to the picture blender processing unit 82 by way of the graphic-picture-processing unit 81 before being fed to the CGMS insertion unit 64.

Then, at the next step S308, the controller 69 controls the CGMS insertion unit 64 and the macrovision insertion unit 63 to add a CGMS and a macrovision respectively to a display picture of the thumbnail in accordance with CP_Info_ thumbnail( ) acquired in the processing carried out at the step S306.

Subsequently, at the next step S309, the controller 69 issues a command to output the display picture of the thumbnail as a video from the terminal 62.

In accordance with what is described so far, the present invention has the following capabilities:

(1): A capability of protecting the copyright of a thumbnail picture. This capability is attributed to the fact that the thumbnail picture is encrypted.

(2): A capability of managing thumbnail pictures by distinguishing thumbnail pictures recorded on a recording medium in an encrypted state from thumbnail pictures recorded on the recording medium in an unencrypted state even if it is quite within the bounds of possibility that encrypted thumbnail pictures recorded on the recording medium coexist with unencrypted thumbnail pictures recorded on the same recording medium for a case in which an AV stream is recorded along with thumbnail pictures representing representative and characteristic pictures of the AV stream. This capability is attributed to the fact that the recording medium is also used for storing information indicating whether a recorded thumbnail picture is an encrypted or unencrypted picture.

(3): A capability of managing thumbnail pictures by using a thumbnail-information file as a relatively small database. This capability is attributed to the fact that a thumbnail-picture file for storing thumbnail pictures is recorded on the recording medium separately from a thumbnail-information file for storing information for distinguishing thumbnail pictures recorded on the recording medium in an encrypted state from thumbnail pictures recorded on the recording medium in an unencrypted state as explained in the above description of capability (2). As a result, there is also provided a capability of easily acquiring information indicating whether a recorded thumbnail picture is an encrypted or unencrypted picture at a high speed in the case of a request for reproduction of the thumbnail picture.

(4) : A capability of easily decoding a thumbnail picture fetched from a file in a reproduction process. This capability is attributed to the fact that, in the reproduction process, there is no decryption ON/OFF switching. This is because there is no encryption ON/OFF switching in a thumbnail-picture file due to the fact that the thumbnail-picture file cited in the above description of capability (3) is split into two files, namely, a menu.tdt1 file for storing encrypted thumbnail pictures and a menu.tdt2 file for storing unencrypted thumbnail pictures.

(5): A capability of easily managing thumbnail pictures by using a database for distinguishing thumbnail pictures recorded on the recording medium in an encrypted state from thumbnail pictures recorded on the recording medium in an unencrypted state. This capability is attributed to the fact that there is provided only one thumbnail-picture file cited in the above description of capability (3). This is because the thumbnail-picture file has a format allowing an encrypted thumbnail portion and an unencrypted thumbnail portion accommodated in the single thumbnail-picture file to switch therebetween. It is to be noted that, by switching from the encrypted thumbnail portion to the unencrypted thumbnail portion and vice versa on boundaries.of tn_block units, which are smallest units, data can be recorded onto the recording medium in a manner not wasting the storage area of the recording medium. In addition, it is also possible to switch from the encrypted thumbnail portion to the unencrypted thumbnail portion and vice versa on boundaries of larger units each consisting of a plurality of tn_block. By setting the size of the larger unit consisting of a plurality of tn_block at the same size of an ECC block, for example, in a reproduction process to fetch an ECC block, decryption ON/OFF switching is not required, making it possible to make the decryption process simple.

(6) : A capability of carrying out a recording process by addition of content protection information CP_Information_ thumbnail( ) to a thumbnail picture recorded as explained in the description of capability (2) .

(7) : A thumbnail picture and its content protection information cited in the description of capability (6) are recorded on the recording medium in block (tn_block) units each having a predetermined size.

(8): A capability of closing an encryption process for each tn_block unit in the recording process cited in the description of capability (6).

(9): A capability of carrying out a recording process by encryption of a thumbnail picture recorded as explained in the description of capability (2) in case CCI of a raw picture used as a source for creating the thumbnail picture indicates 'Copy Once' protection.

Capabilities (6) to (9) prevent the contents of CP_Info_thumbnail( ) from being falsified by a user having an evil intention. In addition, it is possible to take a measure for preventing a copy of a thumbnail picture from being reproduced or decrypted even if the copy has been obtained by copying the thumbnail picture, which has CCI_thumbnail with a value meaning 'No More Copy', to another recording medium in a bit-by-bit-copy operation.

Capability (8) closes an encryption process for each tn_block unit. Thus, in an operation to read out any arbitrary thumbnail picture from a thumbnail-picture file, it is necessary only to decrypt an encrypted tn_block containing the thumbnail picture. As a result, the amount of data processing can be minimized.

(10) : A capability of providing a relatively easy implementation so as to give high compatibility by adoption of a format conforming to a JPEG encoding technique as a format of a thumbnail picture recorded as explained in the description of capability (2). This capability is attributed to the fact that the JPEG encoding technique is widely used as a de-facto standard.

(11): A capability of managing thumbnail pictures by distinguishing thumbnail pictures recorded on a recording medium in an encrypted state from thumbnail pictures recorded on the recording medium in an unencrypted state even if it is quite within the bounds of possibility that encrypted thumbnail pictures recorded on the recording medium coexist with unencrypted thumbnail pictures recorded on the same recording medium for a case in which a video information is recorded along with thumbnail pictures representing representative and characteristic pictures of the video information. This capability is attributed to the fact that, in an operation to reproduce a specific thumbnail picture from the recording medium for recording video information along with thumbnail pictures representing representative and characteristic pictures of the video information, particular information for distinguishing a thumbnail picture recorded on a recording medium in an encrypted state from a thumbnail picture recorded on the recording medium in an unencrypted state is also read out from the recording medium and the specific thumbnail picture is reproduced on the basis of this particular information.

It is to be noted that, in accordance with the above description, the thumbnail-information file and the thumbnail-picture file are managed as separate files. However, the thumbnail-information file and the thumbnail-picture file can also be combined into a single file. In this case, for example, it is possible to manage an object created as a collection of pieces of information for distinguishing a thumbnail picture recorded on a recording medium in an encrypted state from a thumbnail picture recorded on the recording medium in an unencrypted state and an object created as a collection of thumbnail pictures by using the single file.

In addition, it is not always necessary to manage data as files, that is, to manage data by using a file system. For example, it is also possible to manage data as objects that can be managed by the recording/reproduction apparatus.

Furthermore, in accordance with the above description, the recording apparatus and the reproduction apparatus are separate apparatus each having its own configuration. However, it is of course possible to integrate the recording apparatus and the reproduction apparatus into a single apparatus capable of carrying out both the recording and reproduction processes. In the case of such an integrated apparatus, any configuration shown in the block diagrams of Figs. 26, 30 and 32 can be adopted as a proper configuration common to both the recording and reproduction processes.

Moreover, in accordance with the above description, it is an AV stream that is recorded and reproduced. However, the present invention can also be applied to a case in which only video information is recorded or reproduced.

The sequence of processes described above can be carried out by not only hardware but also software.

If the sequence of processes is carried out by software, programs composing the software are installed in a computer embedded in specially provided hardware from a network or recording media. As an alternative, the programs are installed in an apparatus capable of carrying out a variety of functions from a network or recording media. An example of the apparatus capable of carrying out a variety of functions is a general-purpose personal computer.

The recording media from which the programs are installed includes package media, which is used for storing the programs in advance and is to be distributed to users. The package media includes magnetic discs such as floppy discs, optical discs such as a CD-ROM (Compact-Disc Read-Only Memory), DVDs (Digital Versatile Discs), magneto-optical discs such as an MD (Mini Disc, a trademark) and semiconductor memories. As an alternative, instead of installing the programs to be distributed to users from a network or recording media, the programs can be stored beforehand in storage media embedded in advance in the main unit of the computer or the apparatus cited above. Examples of the embedded storage media are a ROM and a hard disc.

It is to be noted that steps prescribing each of the programs stored in the recording media can of course be executed in accordance with an order along the time axis. However, the steps do not have to be executed in accordance with an order along the time axis. For example, the steps may also include pieces of processing to be carried out concurrently or individually.

Industrial Applicability

In accordance with the present invention, even if it is quite within the bounds of possibility that encrypted thumbnail pictures recorded on the recording medium coexist with unencrypted thumbnail pictures recorded on the same recording medium, it is possible to manage the thumbnail pictures recorded in an encrypted state and the thumbnail pictures recorded in an unencrypted state by distinguishing the former and the latter from each other.

**Claims**

1. A video-information-recording apparatus, comprising:

   first acquisition means (12) for acquiring video information to be recorded;
   second acquisition means (19) for acquiring thumbnail picture information to be recorded in association with said video information;
   judgment means (20) for judging, on the basis of content protection information of said video information acquired by said first acquisition means, whether or not said thumbnail picture information is to be encrypted,
   encryption means (22) for encrypting said thumbnail picture information acquired by said second acquisition means if said judgment means judges that the thumbnail picture information is to be encrypted; and
   recording means (25) for recording said video information acquired by said first acquisition means onto a recording medium, and for recording said thumbnail picture information encrypted by said encryption means onto said recording medium if said judgment means judges that the thumbnail picture information is to be encrypted.

2. A video-information-recording apparatus according to claim 1, wherein said second acquisition means (19) is operable to acquire said thumbnail picture information from said video information acquired by said first acquisition means (12).

3. A video-information-recording apparatus according to claim 1, wherein said judgment means (20) judges that the thumbnail picture information is to be encrypted if said content protection information of said video information acquired by said first acquisition means (12) indicates that said video information can be copied only once.

4. A video-information-recording apparatus according to claim 1, wherein said encryption means (22) is operable to encrypt the content protection information of said thumbnail picture information and wherein said recording means (25) is operable to record said encrypted content protection information of said thumbnail picture information.

5. A video-information-recording apparatus according to claim 4, wherein said recording means (25) is operable to record said thumbnail picture information as a block unit having a size of a predetermined block of data.

6. A video-information-recording apparatus according to claim 5, wherein said encryption means (22) is operable to encrypt said thumbnail picture in a range of said predetermined block.

7. A video-information-recording apparatus according to claim 6, wherein said recording means (25) is operable to record identification information indicating that said recorded thumbnail picture information is encrypted thumbnail picture information.

8. A video-information-recording apparatus according to claim 7, wherein said recording means (25) is operable to record said thumbnail picture information and said identification information independently of each other.

9. A video-information-recording method adopted by a video-information-recording apparatus for recording video information onto a recording medium, the video-information-recording method comprising:

   a first acquisition step of acquiring said video information to be recorded;

a second acquisition step of acquiring thumbnail picture information to be recorded in association with said video information;

a judging step of judging, on the basis of content protection information of said video information acquired in said second acquisition step, whether or not said thumbnail picture information is to be encrypted;

an encryption step of encrypting said thumbnail picture information acquired in said second acquisition step if it judged at said judging step that the thumbnail picture information is to be encrypted; and

a recording step of recording said video information acquired in said first acquisition step on to a recording medium, and for recording said thumbnail picture information encrypted in said encryption step onto said recording medium if it is judged at said judging step that the thumbnail picture information is to be encrypted.

10. A program to be executed by a computer for controlling a video-information-recording apparatus for recording video information onto a video-information-recording medium, the program comprising:

a first acquisition step of acquiring said video information to be recorded;

a second acquisition step of acquiring thumbnail picture information to be recorded in association with said video information;

a judging step of judging, on the basis of content protection information of said video information acquired in said second acquisition step, whether or not said thumbnail pictured information is to be encrypted;

an encryption step of encrypting said thumbnail picture information acquired in said second acquisition step if it is judged at said judging step that the thumbnail picture information is to be encrypted; and

a recording step of recording said video information acquired in said first acquisition step onto said video-information-recording medium and for recording said thumbnail picture information encrypted in said encryption step onto said video-information-recording medium if it is judged at said judging step that the thumbnail picture information is to be encrypted.

11. A program-recording medium storing a program according to claim 10.

12. A video-information reproduction apparatus for reproducing video information and thumbnail picture information stored to a record medium by a video-information-recording apparatus according to claim 1, said video-information reproduction apparatus comprises:

reproduction means (74) for reproducing a signal from a recording medium;

extraction means (69) for extracting a signal of an encrypted thumbnail picture from said signal reproduced by said reproduction means and identification information indicating that said extracted thumbnail picture information is encrypted thumbnail picture information;

judgment means (69) for judging whether or not thumbnail picture information is to be decrypted on the basis of said identification information extracted by said extraction means;

decryption means (80) for decrypting said encrypted-thumbnail-picture-representing signal extracted by said extraction means if said judgment means judges that the thumbnail picture representing signal is to be decrypted; and

output means for outputting a signal of said thumbnail picture decrypted by said decryption means.

13. A video-information reproduction apparatus according to claim 12, wherein said extraction means (69) is operable to extract encrypted content protection information of said thumbnail picture information, and said decryption means (80) is operable to decrypt said encrypted content protection information of said thumbnail picture information.

14. A video-information reproduction apparatus according to claim 13, wherein said reproduction means (74) is operable to reproduce said thumbnail picture information as a block unit having a size of a predetermined block of data.

15. A video-information reproduction apparatus according to claim 14, wherein said decryption means (80) is operable to decrypt said thumbnail picture information in a range of said predetermined block.

16. A video-information reproduction apparatus according to claim 15, wherein said reproduction means (74) is operable to reproduce said thumbnail picture information and said identification information for said thumbnail picture independently of each other.

17. A video-information reproduction method adopted by a video-information reproduction apparatus for reproducing video information and thumbnail picture information stored to a record medium using a video-information-recording method according to claim 13 comprising:

a reproduction step of reproducing a signal from said recording medium;

an extraction step of extracting a signal of an encrypted thumbnail picture from said signal reproduced in processing carried out at said reproduction step and identification information indicating that said extracted thumbnail picture information is encrypted thumbnail picture information;

a judging step for judging whether or not thumbnail picture information is to be decrypted on the basis of said identification information extracted at said extraction step;

a decryption step of decrypting said signal of said encrypted thumbnail picture extracted in processing carried out at said extraction step if it is judged at said judging step that the thumbnail picture information is to be decrypted; and

an output step of outputting said signal of said thumbnail picture decrypted in processing carried out at said decryption step.

18. A program to be executed by a computer for controlling a video-information-reproduction apparatus for reproducing video information and thumbnail picture information stored to a recording medium using a video-information recording method according to claim 13 comprising:

a reproduction step of reproducing a signal from said recording medium;

an extraction step of extracting a signal of said encrypted thumbnail picture from said signal reproduced in processing carried out at said reproduction step and identification information indicating that said extracted thumbnail picture information is encrypted thumbnail picture information;

a judging step for judging whether or not thumbnail picture information is to be decrypted on the basis of said identification information extracted at said extraction step;

a decryption step of decrypting said signal of said encrypted thumbnail picture extracted in processing carried out at said extraction step if it is judged at said judging step that the thumbnail picture information is to be decrypted; and

an output step of outputting said signal of said thumbnail picture decrypted in processing carried out at said decryption step.

19. A program-recording medium storing a program according to claim 18.

**Patentansprüche**

1. Videoinformations-Aufzeichnungsvorrichtung, welche umfasst:

eine erste Erlangungseinrichtung (12) zum Erlangen von aufzuzeichnender Videoinformation;

eine zweite Erlangungseinrichtung (19) zum Erlangen von Miniaturbildinformation, welche in Verbindung mit der Videoinformation aufzuzeichnen ist;

eine Beurteilungseinrichtung (20) zum Beurteilen - auf Basis einer Inhaltsschutzinformation der Videoinformation, welche durch die erste Erlangungseinrichtung erlangt wurde - ob oder nicht die Miniaturbildinformation zu verschlüsseln ist,

eine Verschlüsselungseinrichtung (22) zum Verschlüsseln der Miniaturbildinformation, welche durch die zweite Erlangungseinrichtung erlangt wurde, wenn die Beurteilungseinrichtung beurteilt, dass die Miniaturbildinformation zu verschlüsseln ist; und

eine Aufzeichnungseinrichtung (25) zum Aufzeichnen der Videoinformation, welche durch die erste Erlangungseinrichtung erlangt wurde, auf einem Aufzeichnungsmedium, und zum Aufzeichnen der Miniaturbildinformation, welche durch die Verschlüsselungseinrichtung verschlüsselt wurde, auf dem Aufzeichnungsmedium, wenn die Beurteilungseinrichtung beurteilt, dass die Miniaturbildinformation zu verschlüsseln ist.

2. Videoinformations-Aufzeichnungsvorrichtung nach Anspruch 1, wobei die zweite Erlangungseinrichtung (19) betriebsfähig ist, die Miniaturbildinformation von der Videoinformation zu erlangen, welche durch die erste Erlangungseinrichtung (12) erlangt wurde.

3. Videoinformations-Aufzeichnungsvorrichtung nach Anspruch 1, wobei die Beurteilungseinrichtung (20) beurteilt, ob die Miniaturbildinformation zu verschlüsseln ist, wenn die Inhaltsschutzinformation der Videoinformation, welche durch die erste Erlangungseinrichtung (12) erlangt wurde, zeigt, dass die Videoinformation lediglich einmal kopiert werden kann.

4. Videoinformations-Aufzeichnungsvorrichtung nach Anspruch 1, wobei die Verschlüsselungseinrichtung (22) betriebsfähig ist, die Inhaltsschutzinformation der Miniaturbildinformation zu verschlüsseln, und wobei die Aufzeichnungseinrichtung 825) betriebsfähig ist, die verschlüsselte Inhaltsschutzinformation der Miniaturbildinformation aufzuzeichnen.

5. Videoinformations-Aufzeichnungsvorrichtung nach Anspruch 4, wobei die Aufzeichnungseinrichtung (25) betriebsfähig ist, die Miniaturbildinformation als Blockeinheit, welche eine Größe eines vorher bestimmten Blocks von Daten hat, aufzuzeichnen.

6. Videoinformations-Aufzeichnungsvorrichtung nach Anspruch 5, wobei die Verschlüsselungseinrichtung (22) betriebsfähig ist, das Miniaturbild in einem Bereich des vorher bestimmten Blocks zu verschlüsseln.

7. Videoinformations-Aufzeichnungsvorrichtung nach Anspruch 6, wobei die Aufzeichnungseinrichtung (25) betriebsfähig ist, Identifikationsinformation aufzuzeichnen, die zeigt, dass die aufgezeichnete Miniaturbildinformation verschlüsselte Miniaturbildinformation ist.

8. Videoinformations-Aufzeichnungsvorrichtung nach Anspruch 7, wobei die Aufzeichnungseinrichtung (25) betriebsfähig ist, die Miniaturbildinformation und die Identifikationsinformation unabhängig voneinander aufzuzeichnen.

9. Videoinformations-Aufzeichnungsverfahren, welches durch eine Videoinformations-Aufzeichnungsvorrichtung verwendet wird, um Videoinformation auf einem Aufzeichnungsmedium aufzuzeichnen, wobei das Videoinformations-Aufzeichnungsverfahren umfasst:

   einen ersten Erlangungsschritt zum Erlangen der Videoinformation, welche aufzuzeichnen ist;
   einen zweiten Erlangungsschritt zum Erlangen von Miniaturbildinformation, welche in Verbindung mit der Videoinformation aufzuzeichnen ist;
   einen Beurteilungsschritt zum Beurteilen - auf Basis einer Inhaltsschutzinformation der Videoinformation, welche im zweiten Erlangungsschritt erlangt wurde - ob oder nicht die Miniaturbildinformation zu verschlüsseln ist;
   einen Verschlüsselungsschritt zum Verschlüsseln der Miniaturbildinformation, welche im zweiten Erlangungsschritt erlangt wurde, wenn im Beurteilungsschritt beurteilt wird, dass die Miniaturbildinformation zu verschlüsseln ist; und
   einen Aufzeichnungsschritt zum Aufzeichnen der Videoinformation, welche im ersten Erlangungsschritt erlangt wurde, auf einem Aufzeichnungsmedium, und zum Aufzeichnen der Miniaturbildinformation, welche im Verschlüsselungsschritt verschlüsselt wurde, auf dem Aufzeichnungsmedium, wenn im Beurteilungsschritt beurteilt wird, dass die Miniaturbildinformation zu verschlüsseln ist.

10. Programm, welches durch einen Computer auszuführen ist, um eine Videoinformations-Aufzeichnungsvorrichtung zum Auszeichnen von Videoinformation auf einem Videoinformations-Aufzeichnungsmedium zu steuern, wobei das Programm umfasst:

   einen ersten Erlangungsschritt zum Erlangen der Videoinformation, welche aufzuzeichnen ist;
   einen zweiten Erlangungsschritt zum Erlangen von Miniaturbildinformation, welche in Verbindung mit der Videoinformation aufzuzeichnen ist;
   einen Beurteilungsschritt zum Beurteilen - auf Basis einer Inhaltsschutzinformation der Videoinformation, welche im zweiten Erlangungsschritt erlangt wurde - ob oder nicht die Miniaturbildinformation zu verschlüsseln ist;
   einen Verschlüsselungsschritt zum Verschlüsseln der Miniaturbildinformation, welche im zweiten Erlangungsschritt erlangt wurde, wenn im Beurteilungsschritt beurteilt wird, dass die Miniaturbildinformation zu verschlüsseln ist; und
   einen Aufzeichnungsschritt zum Aufzeichnen der Videoinformation, welche im ersten Erlangungsschritt erlangt wurde, auf einem Aufzeichnungsmedium, und zum Aufzeichnen der Miniaturbildinformation, welche im Verschlüsselungsschritt verschlüsselt wurde, auf dem Aufzeichnungsmedium, wenn im Beurteilungsschritt beurteilt wird, dass die Miniaturbildinformation zu verschlüsseln ist.

11. Programmaufzeichnungsmedium zum Speichern eines Programms nach Anspruch 10.

12. Videoinformations-Wiedergabevorrichtung zum Wiedergeben von Videoinformation und von Miniaturbildinformation, welche auf einem Aufzeichnungsmedium durch eine Videoinformations-Aufzeichnungsvorrichtung nach Anspruch 1 gespeichert wurde, wobei die Videoinformations-Wiedergabevorrichtung umfasst:

eine Wiedergabeeinrichtung (74) zum Wiedergeben eines Signals von einem Aufzeichnungsmedium;
eine Extraktionseinrichtung (69) zum Extrahieren eines Signals eines verschlüsselten Miniaturbilds von dem Signal, welches durch die Wiedergabeeinrichtung wiedergegeben wird, und Identifikationsinformation, die zeigt, dass die extrahierte Miniaturbildinformation verschlüsselte Miniaturbildinformation ist;
eine Beurteilungseinrichtung (69) zum Beurteilen, ob oder nicht Miniaturbildinformation zu verschlüsseln ist, auf Basis der Identifikationsinformation, welche durch die Extraktionseinrichtung extrahiert wird;
eine Entschlüsselungseinrichtung (80) zum Entschlüsseln des verschlüsselten Miniaturbild-Darstellungssignals, welches durch die Extraktionseinrichtung extrahiert wird, wenn die Beurteilungseinrichtung beurteilt, dass das Miniaturbild-Darstellungssignal zu entschlüsseln ist; und
eine Ausgabeeinrichtung zum Ausgeben eines Signals des Miniaturbilds, welches durch die Entschlüsselungseinrichtung entschlüsselt wird.

13. Videoinformations-Wiedergabevorrichtung nach Anspruch 12, wobei die Extraktionseinrichtung (69) betriebsfähig ist, verschlüsselte Inhaltsschutzinformation der Miniaturbildinformation zu extrahieren, und die Entschlüsselungseinrichtung (80) betriebsfähig ist, die verschlüsselte Inhaltsschutzinformation der Miniaturbildinformation zu entschlüsseln.

14. Videoinformations-Wiedergabevorrichtung nach Anspruch 13, wobei die Wiedergabeeinrichtung (74) betriebsfähig ist, die Miniaturbildinformation als Blockeinheit, welche eine Größe eines vorher bestimmten Datenblocks hat, wiederzugeben.

15. Videoinformations-Wiedergabevorrichtung nach Anspruch 14, wobei die Entschlüsselungseinrichtung (80) betriebsfähig ist, die Miniaturbildinformation in einem Bereich des vorher bestimmten Blocks zu entschlüsseln.

16. Videoinformations-Wiedergabevorrichtung nach Anspruch 15, wobei die Wiedergabeeinrichtung (74) betriebsfähig ist, die Miniaturbildinformation und die Identifikationsinformation für das Miniaturbild unabhängig voneinander wiederzugeben.

17. Videoinformations-Wiedergabeverfahren, welches durch eine Videoinformations-Wiedergabevorrichtung verwendet wird, um Videoinformation und Miniaturbildinformation wiederzugeben, welche auf einem Aufzeichnungsmedium gespeichert ist, unter Verwendung eines Videoinformations-Aufzeichnungsverfahrens nach Anspruch 13, welches umfasst:

einen Wiedergabeschritt zum Wiedergeben eines Signals vom Aufzeichnungsmedium;
einen Extraktionsschritt zum Extrahieren eines Signals eines verschlüsselten Miniaturbilds von dem Signal, welches bei der Verarbeitung wiedergegeben wird, welche im Wiedergabeschritt ausgeführt wird, und von Identifikationsinformation, welche zeigt, dass die extrahierte Miniaturbildinformation verschlüsselte Miniaturbildinformation ist;
einen Beurteilungsschritt zum Beurteilen, ob oder nicht Miniaturbildinformation zu entschlüsseln ist, auf Basis der Identifikationsinformation, welche im Extraktionsschritt extrahiert wird;
einen Entschlüsselungsschritt zum Entschlüsseln des Signals des verschlüsselten Miniaturbilds, welches bei der Verarbeitung extrahiert wird, welche im Extraktionsschritt ausgeführt wird, wenn im Beurteilungsschritt beurteilt wird, dass die Miniaturbildinformation zu entschlüsseln ist; und
einen Ausgabeschritt zum Ausgeben des Signals des Miniaturbilds, welches bei der Verarbeitung entschlüsselt wurde, welche im Entschlüsselungsschritt ausgeführt wird.

18. Programm, welches durch einen Computer auszuführen ist, um eine Videoinformations-Wiedergabevorrichtung zu steuern, um Videoinformation und Miniaturbildinformation wiederzugeben, welche auf einem Aufzeichnungsmedium gespeichert sind, unter Verwendung eines Videoinformations-Aufzeichnungsverfahrens nach Anspruch 13, welches umfasst:

einen Wiedergabeschritt zum Wiedergeben eines Signals vom Aufzeichnungsmedium;
einen Extraktionsschritt zum Extrahieren eines Signals eines verschlüsselten Miniaturbilds von dem Signal, welches bei der Verarbeitung wiedergegeben wird, welche im Wiedergabeschritt ausgeführt wird, und von Identifikationsinformation, welche zeigt, dass die extrahierte Miniaturbildinformation verschlüsselte Miniaturbildinformation ist;

einen Beurteilungsschritt zum Beurteilen, ob oder nicht Miniaturbildinformation zu entschlüsseln ist, auf Basis der Identificationsinformation, welche im Extraktionsschritt extrahiert wird;

einen Entschlüsselungsschritt zum Entschlüsseln des Signals des verschlüsselten Miniaturbilds, welches bei der Verarbeitung extrahiert wird, welche im Extraktionsschritt ausgeführt wird, wenn im Beurteilungsschritt beurteilt wird, dass die Miniaturbildinformation zu entschlüsseln ist; und

einen Ausgabeschritt zum Ausgeben des Signals des Miniaturbilds, welches bei der Verarbeitung entschlüsselt wurde, welche im Entschlüsselungsschritt ausgeführt wird.

**19.** Programmaufzeichnungsmedium, welches ein Programm nach Anspruch 18 speichert.

## Revendications

**1.** Appareil d'enregistrement d'informations vidéo, comprenant :

des premiers moyens d'acquisition (12) pour acquérir des informations vidéo à enregistrer ;

des deuxièmes moyens d'acquisition (19) pour acquérir des informations d'image timbre-poste à enregistrer en association avec lesdites informations Vidéo ;

des moyens de jugement (20) pour juger, sur la base d'informations de protection de contenu desdites informations vidéo acquises par lesdits premiers moyens d'acquisition, si, oui ou non, lesdites informations d'image timbre-poste doivent être chiffrées ;

des moyens de chiffrement (22) pour chiffrer lesdites informations d'image timbre-poste acquises par lesdits deuxièmes moyens d'acquisition si lesdits moyens de jugement jugent que les informations d'image timbre-poste doivent être chiffrées ; et

des moyens d'enregistrement (25) pour enregistrer lesdites informations vidéo acquises par lesdits premiers moyens d'acquisition sur un support d'enregistrement, et pour enregistrer lesdites informations d'image timbre-poste chiffrées par lesdits moyens de chiffrement sur ledit support d'enregistrement si lesdits moyens de jugement jugent que les informations d'image timbre-poste doivent être chiffrées.

**2.** Appareil d'enregistrement d'informations vidéo selon la revendication 1, dans lequel lesdits deuxièmes moyens d'acquisition (19) peuvent être utilisés pour acquérir lesdites informations d'image timbre-poste à partir desdites informations vidéo acquises par lesdits premiers moyens d'acquisition (12).

**3.** Appareil d'enregistrement d'informations vidéo selon la revendication 1, dans lequel lesdits moyens de jugement (20) jugent que les informations d'image timbre-poste doivent être chiffrées si lesdites informations de protection de contenu desdites informations vidéo acquises par lesdits premiers moyens d'acquisition (12) indiquent que lesdites informations vidéo ne peuvent être copiées qu'une seule fois.

**4.** Appareil d'enregistrement d'informations vidéo selon la revendication 1, dans lequel lesdits moyens de chiffrement (22) peuvent être utilisés pour chiffrer les informations de protection de contenu desdites informations d'image timbre-poste, et dans lequel lesdits moyens d'enregistrement (25) peuvent être utilisés pour enregistrer lesdites informations de protection de contenu chiffrées desdites informations d'image timbre-poste.

**5.** Appareil d'enregistrement d'informations vidéo selon la revendication 4, dans lequel lesdits moyens d'enregistrement (25) peuvent être utilisés pour enregistrer lesdites informations d'image timbre-poste en tant qu'unité de bloc ayant une taille d'un bloc prédéterminé de données.

**6.** Appareil d'enregistrement d'informations vidéo selon la revendication 5, dans lequel lesdits moyens de chiffrement (22) peuvent être utilisés pour chiffrer ladite image timbre-poste dans une plage dudit bloc prédéterminé.

**7.** Appareil d'enregistrement d'informations vidéo selon la revendication 6, dans lequel lesdits moyens d'enregistrement (25) peuvent être utilisés pour enregistrer des informations d'identification indiquant que lesdites informations d'image timbre-poste enregistrées sont des informations d'image timbre-poste chiffrées.

**8.** Appareil d'enregistrement d'informations vidéo selon la revendication 7, dans lequel lesdits moyens d'enregistrement (25) peuvent être utilisés pour enregistrer lesdites informations d'image timbre-poste et lesdites informations d'identification indépendamment les unes des autres.

9. Procédé d'enregistrement d'informations vidéo adopté par un appareil d'enregistrement d'informations vidéo pour enregistrer des informations vidéo sur un support d'enregistrement, le procédé d'enregistrement d'informations vidéo comprenant :

une première étape d'acquisition consistant à acquérir lesdites informations vidéo à enregistrer ;
une deuxième étape d'acquisition consistant à acquérir des informations d'image timbre-poste à enregistrer en association avec lesdites informations vidéo ;
une étape de jugement consistant à juger, sur la base d'informations de protection de contenu desdites informations vidéo acquises à ladite deuxième étape d'acquisition, si, oui ou non, lesdites informations d'image timbre-poste doivent être chiffrées ;
une étape de chiffrement consistant à chiffrer lesdites informations d'image timbre-poste acquises à ladite deuxième étape d'acquisition s'il est jugé à ladite étape de jugement que les informations d'image timbre-poste doivent être chiffrées ; et
une étape d'enregistrement consistant à enregistrer lesdites informations vidéo acquises à ladite première étape d'acquisition sur un support d'enregistrement, et pour enregistrer lesdites informations d'image timbre-poste chiffrées à ladite étape de chiffrement sur ledit support d'enregistrement s'il est jugé à ladite étape de jugement que les informations d'image timbre-poste doivent être chiffrées.

10. Programme à exécuter par un ordinateur pour commander un appareil d'enregistrement d'informations vidéo pour enregistrer des informations vidéo sur un support d'enregistrement d'informations vidéo, le programme comprenant :

une première étape d'acquisition consistant à acquérir lesdites informations vidéo à enregistrer ;
une deuxième étape d'acquisition consistant à acquérir des informations d'image timbre-poste à enregistrer en association avec lesdites informations vidéo ;
une étape de jugement consistant à juger, sur la base d'informations de protection de contenu desdites informations vidéo acquises à ladite deuxième étape d'acquisition, si, oui ou non, lesdites informations d'image timbre-poste doivent être chiffrées ;
une étape de chiffrement consistant à chiffrer lesdites informations d'image timbre-poste acquises à ladite deuxième étape d'acquisition s'il est jugé à ladite étape de jugement que les informations d'image timbre-poste doivent être chiffrées ; et
une étape d'enregistrement consistant à enregistrer lesdites informations vidéo acquises à ladite première étape d'acquisition sur ledit support d'enregistrement d'informations vidéo et pour enregistrer lesdites informations d'image timbre-poste chiffrées à ladite étape de chiffrement sur ledit support d'enregistrement d'informations vidéo s'il est jugé à ladite étape de jugement que les informations d'image timbre-poste doivent être chiffrées.

11. Support d'enregistrement de programme mémorisant un programme selon la revendication 10.

12. Appareil de reproduction d'informations vidéo pour reproduire des informations vidéo et des informations d'image timbre-poste mémorisées sur un support d'enregistrement par un appareil d'enregistrement d'informations vidéo selon la revendication 1, ledit appareil de reproduction d'informations vidéo comprenant :

des moyens de reproduction (74) pour reproduire un signal à partir d'un support d'enregistrement ;
des moyens d'extraction (69) pour extraire un signal d'une image timbre-poste chiffrée dudit signal reproduit par lesdits moyens de reproduction et des informations d'identification indiquant que lesdites informations d'image timbre-poste extraites sont des informations d'image timbre-poste chiffrées ;
des moyens de jugement (69) pour juger si, oui ou non, les informations d'image timbre-poste doivent être déchiffrées sur la base desdites informations d'identification extraites par lesdits moyens d'extraction ;
des moyens de déchiffrement (80) pour déchiffrer ledit signal représentant une image timbre-poste chiffrée extrait par lesdits moyens d'extraction si lesdits moyens de jugement jugent que le signal représentant une image timbre-poste doit être déchiffré ; et
des moyens de sortie pour délivrer un signal de ladite image timbre-poste déchiffrée par lesdits moyens de déchiffrement.

13. Appareil de reproduction d'informations vidéo selon la revendication 12, dans lequel lesdits moyens d'extraction (69) peuvent être utilisés pour extraire des informations de protection de contenu chiffrées desdites informations d'image timbre-poste, et lesdits moyens de déchiffrement (80) peuvent être utilisés pour déchiffrer lesdites informations de protection de contenu chiffrées desdites informations d'image timbre-poste.

**14.** Appareil de reproduction d'informations vidéo selon la revendication 13, dans lequel lesdits moyens de reproduction (74) peuvent être utilisés pour reproduire lesdites informations d'image timbre-poste en tant qu'unité de bloc ayant une taille d'un bloc prédéterminé de données.

**15.** Appareil de reproduction d'informations vidéo selon la revendication 14, dans lequel lesdits moyens de déchiffrement (80) peuvent être utilisés pour déchiffrer lesdites informations d'image timbre-poste dans une plage dudit bloc prédéterminé.

**16.** Appareil de reproduction d'informations vidéo selon la revendication 15, dans lequel lesdits moyens de reproduction (74) peuvent être utilisés pour reproduire lesdites informations d'image timbre-poste et lesdites informations d'identification pour ladite image timbre-poste indépendamment les unes des autres.

**17.** Procédé de reproduction d'informations vidéo adopté par un appareil de reproduction d'informations vidéo pour reproduire des informations vidéo et des informations d'image timbre-poste mémorisées sur un support d'enregistrement en utilisant un procédé d'enregistrement d'informations vidéo selon la revendication 13 comprenant :

une étape de reproduction consistant à reproduire un signal à partir dudit support d'enregistrement ;
une étape d'extraction consistant à extraire un signal d'une image timbre-poste chiffrée dudit signal reproduit lors du traitement effectué à ladite étape de reproduction et des informations d'identification indiquant que lesdites informations d'image timbre-poste extraites sont des informations d'image timbre-poste chiffrées ;
une étape de jugement pour juger si, oui ou non, les informations d'image timbre-poste doivent être déchiffrées sur la base desdites informations d'identification extraites à ladite étape d'extraction ;
une étape de déchiffrement consistant à déchiffrer ledit signal de ladite image timbre-poste chiffrée extraite lors du traitement effectué à ladite étape d'extraction s'il est jugé à ladite étape de jugement que les informations d'image timbre-poste doivent être déchiffrées ; et
une étape de sortie consistant à délivrer ledit signal de ladite image timbre-poste déchiffrée lors du traitement effectué à ladite étape de déchiffrement.

**18.** Programme à exécuter par un ordinateur pour commander un appareil de reproduction d'informations vidéo pour reproduire des informations vidéo et des informations d'image timbre-poste mémorisées sur un support d'enregistrement en utilisant un procédé d'enregistrement d'informations vidéo selon la revendication 13 comprenant :

une étape de reproduction consistant à reproduire un signal à partir dudit support d'enregistrement ;
une étape d'extraction consistant à extraire un signal de ladite image timbre-poste chiffrée dudit signal reproduit lors du traitement effectué à ladite étape de reproduction et des informations d'identification indiquant que lesdites informations d'image timbre-poste extraites sont des informations d'image timbre-poste chiffrées ;
une étape de jugement pour juger si, oui ou non, les informations d'image timbre-poste doivent être déchiffrées sur la base desdites informations d'identification extraites à ladite étape d'extraction ;
une étape de déchiffrement consistant à déchiffrer ledit signal de ladite image timbre-poste chiffrée extraite lors du traitement effectué à ladite étape d'extraction s'il est jugé à ladite étape de jugement que les informations d'image timbre-poste doivent être déchiffrées ; et
une étape de sortie consistant à délivrer ledit signal de ladite image timbre-poste déchiffrée lors du traitement effectué à ladite étape de déchiffrement.

**19.** Support d'enregistrement de programme mémorisant un programme selon la revendication 18.

F I G. 1

# F I G. 2

Book mark      Resume mark

Virtual PlayList

Book mark                          Resume mark

Real PlayList

Clip

Scene start point   Scene start point

# F I G. 3

Thumbnail { Menu thumbnail ⇨ 0 or 1 per Volume, Playlist

Mark thumbnail ⇨ 0 or above per Playlist, Clip

# F I G. 4

DVR directory

Personal
Computer
(PC)

Picture in
DVR directory

Digital
Still Camera
(DSC)

Menu thumbnail

# F I G. 5

PlayList

PC

DSC

PlayList

PlayList marks

Menu thumbnail

Mark thumbnails

# FIG. 6

Clip

Clip marks

Clip

Mark thumbnails

# FIG. 7

Volume thumbnail    Menu Thumbnail file    Thumbnail pictures

Mark Thumbnail file

PlayList

Clip

# F I G. 8

```
┌──────┐   ┌──────┐
│ root ├───┤ DVR  │
└──────┘   └──┬───┘
              ├─┤ info. dvr │
              ├─┤ menu. tidx │
              ├─┤ menu. tdt1 │
              ├─┤ menu. tdt2 │
              ├─┤ mark. tidx │
              ├─┤ mark. tdt1 │
              ├─┤ mark. tdt2 │
              │
              ├─┤ PLAYLIST ├─┬─┤ 01001. rpls │
              │              ├─┤ 02002. rpls │
              │              └─┤ 99999. vpls │
              │
              ├─┤ CLIPINF ├─┬─┤ 01000. clpi │
              │             ├─┤ 02000. clpi │
              │             └─┤ 03000. clpi │
              │
              └─┤ STREAM ├─┬─┤ 01000. m2ts │
                           ├─┤ 02000. m2ts │
                           └─┤ 03000. m2ts │
```

# F I G. 9

DVR MPEG-2 transport stream

| Aligned Unit | Aligned Unit | Aligned Unit | ... | Aligned Unit | Aligned Unit |
|---|---|---|---|---|---|

←——— 6144 bytes ———→

| source packet-0 | source packet-1 | source packet-2 | ... | source packet-31 |
|---|---|---|---|---|

←——— 192 bytes ———→

| TP_extra header | Transport packet |
|---|---|

←— 4 bytes —→ ←— 188 bytes —→

# F I G. 1 0

| Syntax | No.of bits | Mnemonic |
|---|---|---|
| Info.dvr{ | | |
| ... (Middle portions are omitted) | | |
| UIAppInfoDVR(){ | | |
| ref_to_menu_thumbnail_index | 16 | uimsbf |
| ... | | |
| } | | |
| ... | | |
| } | | |

# F I G. 1 1

| Syntax | No.of bits | Mnemonic |
|---|---|---|
| xxxxx.rpls / yyyyy.vpls | | |
| ··· (Middle portions are omitted) | | |
| PlayListMark(){ | | |
| number_of_PlayList_marks | 16 | uimsbf |
| for(i=0;i<number_of_PlayList_marks;i++){ | | |
| mark_type | 7 | uimsbf |
| ref_to_PlayItem_id· | 16 | uimsbf |
| mark_time_stamp | 32 | uimsbf |
| if(mark_type= ="Representative picture of PlayList")<br>{ | | |
| ref_to_menu_thumbnail_index | 16 | uimsbf |
| }else{ | | |
| ref_to_menu_thumbnail_index | 16 | uimsbf |
| } | | |
| } | | |
| } | | |
| ··· | | |
| } | | |

# F I G. 1 2

| Syntax | No.of bits | Mnemonic |
|---|---|---|
| zzzzz.clpi { | | |
| ... (Middle portions are omitted) | | |
| ClipMark(){ | | |
| number_of_Clip_marks | 16 | uimsbf |
| for(i=0;i<number_of_Clip_marks;i++){ | | |
| mark_type | 7 | uimsbf |
| ref_to_STC_id | 8 | uimsbf |
| mark_time_stamp | 32 | uimsbf |
| ref_to_mark_thumbnail_index | 16 | uimsbf |
| } | | |
| } | | |
| ... | | |
| } | | |

# F I G. 1 3

Thumbnail pictures
for menu. tdt1

Thumbnail pictures
for menu. tdt2

menu. tidx

(a)

(x)

Store

thumbnail_index=A
ref_to_tn_block_id_1=0

thumbnail_index=B
ref_to_tn_block_id_1=1

thumbnail_index=C
ref_to_tn_block_id_1=3

thumbnail_index=X
ref_to_tn_block_id_2=0

thumbnail_index=Y
ref_to_tn_block_id_2=2

thumbnail_index=Z
ref_to_tn_block_id_2=3

(b)

(y)

(c)

(z)

menu. tdt1
(for storing encrypted
thumbnail pictures)

menu. tdt2
(for storing unencrypted
thumbnail pictures)

tn_block
_size

(a)

tn_block_
id=0

tn_block
_size

(x)

tn_block_
id=0

(b)

tn_block_
id=1

Unused
tn_block

tn_block_
id=1

padding_
bytes

Unused
tn_block

tn_block_
id=2

padding_
bytes

(y)

tn_block_
id=2

(c)

tn_block_
id=3

(z)

tn_block_
id=3

# F I G. 1 4

menu. tdt1

tn_block_size

(a)

encryption block unit

(b)

Unused tn_block

(c)

# F I G . 1 5

| Syntax | No.of bits | Mnemonic |
|---|---|---|
| menu.tidx / mark.tidx{ | | |
| number_of_thumbnails_1 | 16 | uimsbf |
| number_of_tn_blocks_1 | 16 | uimsbf |
| number_of_thumbnails_2 | 16 | uimsbf |
| number_of_tn_blocks_2 | 16 | uimsbf |
| tn_block_size | 16 | uimsbf |
| recording_seed | N1 | bslbf |
| for(i=0;i<number_of_thumbnails_1;i++){ | | |
| thumbnail_index | 16 | uimsbf |
| ref_to_tn_block_id_1 | 16 | uimsbf |
| picture_byte_size_1[ref_to_tn_block_id_1] | 32 | uimsbf |
| horizontal_picture_size_1[ref_to_tn_block_id_1] | 16 | uimsbf |
| vertical_picture_size_1[ref_to_tn_block_id_1] | 16 | uimsbf |
| } | | |
| for(i=0;i<number_of_thumbnails_2;i++){ | | |
| thumbnail_index | 16 | uimsbf |
| ref_to_tn_block_id_2 | 16 | uimsbf |
| picture_byte_size_2[ref_to_tn_block_id_2] | 32 | uimsbf |
| horizontal_picture_size_2[ref_to_tn_block_id_2] | 16 | uimsbf |
| vertical_picture_size_2[ref_to_tn_block_id_2] | 16 | uimsbf |
| } | | |
| } | | |

# F I G. 1 6

| Syntax | No.of bits | Mnemonic |
|---|---|---|
| menu.tdt_1 / menu.tdt_2 / mark.tdt_1 / mark.tdt_2{ | | |
| for(tn_block_id=0;tn_block_id<number_of_ tn_blocks;tn_block_id++){ | | |
| tn_block(tn_block_id) | tn_block_ size*1024*8 | |
| } | | |
| } | | |

# F I G. 1 7

| Syntax | No.of bits | Mnemonic |
|---|---|---|
| tn_block(tn_block_id){ | | |
| thumbnail_picture[tn_block_id] | picture_byte_size_1[tn_block_id]*8 or picture_byte_size_2[tn_block_id]*8 | bslbf |
| CP_Info_thumbnail() | N2*8 | bslbf |
| if(l=0;l<NP;l++){ | | |
| padding_byte | 8 | bslbf |
| } | | |
| } | | |

# F I G. 1 8

| Syntax | No.of bits | Mnemonic |
|---|---|---|
| CP_Info_thumbnail(){ | | |
| CCI_thumbnail | 2 | uimsbf |
| APS_thumbnail | 2 | uimsbf |
| } | | |

# F I G. 1 9

| CCI_thumbnail | meaning |
|---|---|
| 00 | copy free |
| 01 | no more copy |
| 10 | copy once |
| 11 | copy prohibited |

# F I G. 2 0

| APS_thumbnail | meaning |
|---|---|
| 00 | copy free |
| 01 | APS is on : Type1(AGC) |
| 10 | APS is on : Type2(AGC+2L Colorstripe) |
| 11 | APS is on : Type3(AGC+4L Colorstripe) |

# F I G. 2 1

Thumbnail to be stored in
an unencrypted state

menu. tidx

(a)

Thumbnail to be stored in
an encrypted state

Store

(b)

Thumbnail to be stored in
an unencrypted state

(c)

```
thumbnail_index=X
ref_to_tn_block_id=0      ---
flag_encrypted_thumbnail=0

thumbnail_index=Y
ref_to_tn_block_id=1      ---
flag_encrypted_thumbnail=1

thumbnail_index=Z
ref_to_tn_block_id=3      ---
flag_encrypted_thumbnail=0
```

menu. tdat

tn_block_size

(a)                →tn_block_id=0  ←

padding_bytes
encrypted tn_block
unencrypted tn_block

(b)                →tn_block_id=1  ←

Not used tn_block   →tn_block_id=2

(c)                →tn_block_id=3  ←

⋮

EP 1 435 734 B1

# FIG. 22

menu.tdat

Encryption on    tn_block_size=16KB
Encryption off

ECC block=64KB

# FIG. 23

menu.tdat

Encryption on    4*tn_block=64KB=ECC block

Encryption off

41

# F I G. 2 4

| Syntax | No.of bits | Mnemonic |
|---|---|---|
| menu.tidx / mark.tidx{ | | |
|     number_of_thumbnails | 16 | uimsbf |
|     tn_block_size | | |
|     number_of_tn_blocks | 16 | uimsbf |
|     recording_seed | N1 | bslbf |
|     for(i=0;i<number_of_thumbnails;i++){ | | |
|         thumbnail_index | 16 | uimsbf |
|         ref_to_tn_block_id | 16 | uimsbf |
|         picture_byte_size[ref_to_tn_block_id] | 32 | uimsbf |
|         horizontal_picture_size[ref_to_tn_block_id] | 16 | uimsbf |
|         vertical_picture_size[ref_to_tn_block_id] | 16 | uimsbf |
|         flag_encrypted_thumbnail[ref_to_tn_block_id] | 1 | bslbf |
|     } | | |
| } | | |

# F I G. 2 5

| Syntax | No.of bits | Mnemonic |
|---|---|---|
| menu.tdat / mark.tdat | | |
| for(tn_block_id=0;tn_block_id<number_of_ tn_blocks;tn_block_id++){ | | |
| tn_block(tn_block_id) | tn_block_ size*1024*8 | |
| } | | |
| } | | |

F I G. 2 6

# F I G. 2 7

| INPUT-SIGNAL STATE | | STATES OF RECORDED AV STREAM AND THUMBNAILS | | | | | | |
|---|---|---|---|---|---|---|---|---|
| CGMS | WM | CCI_o | WM_o | E_CCI | CCI_ thumbnail | APS_ thumbnail | thumbnail-picture encryption ON/OFF |
| 00 | 00 | 00 | 00 | 00 | 00 | 00 | OFF OR ON |
| 01 | 101 | UNRECORDABLE | | | | | |
| 10 | 10 | 01 | 101 | 01 | 01 | 00 | ON |
| 11 | 11 | UNRECORDABLE | | | | | |

00:             copy free
01, 101:       no more copy
10:             copy once
11:             copy prohibited

# F I G. 2 8

| INPUT-SIGNAL STATE | | | STATES OF RECORDED AV STREAM AND THUMBNAILS | | | | | |
|---|---|---|---|---|---|---|---|---|
| E_CCI | APS | WM | CCI_o | WM_o | E_CCI | CCI_ thumbnail | APS_ thumbnail | thumbnail-picture encryption ON/OFF |
| 00 | * | 00 | 00 | 00 | 00 | 00 | SAME STATE AS INPUT SIGNAL | OFF OR ON |
| 01 | * | 101 | UNRECORDABLE | | | | | |
| 10 | * | 10 | 01 | 101 | 01 | 01 | SAME STATE AS INPUT SIGNAL | ON |
| 11 | * | 11 | UNRECORDABLE | | | | | |

# FIG. 29

START OF PROCESSING TO CREATE THUMBNAILS
OF PICTURES (REPRESENTATIVE OR CHARACTERISTIC
PICTURES) AT MARK POINTS OF AV STREAM

ANALYZE CONTENT PROTECTION INFORMATION (SUCH
AS CCI) OF INPUT SIGNAL (VIDEO SIGNAL OR TS)     S101

ENCODE INPUT SIGNAL INTO AV STREAM     S102

ANALYZE VIDEO SIGNAL TO DETECT PICTURES
(REPRESENTATIVE OR CHARACTERISTIC PICTURES)
AT MARK POINTS     S103

ACQUIRE PICTURES AT MARK POINTS     S104

ENCODE PICTURES INTO THUMBNAILS     S105

ANALYZE CONTENT PROTECTION INFORMATION (SUCH
AS CCI) AT AV STREAM'S POSITIONS POINTED TO
BY TIMESTAMPS OF MARK POINTS     S106

CREATE CP_Info_thumbnail () OF THUMBNAIL
PICTURE     S107

DETERMINE ENCRYPTION ON/OFF STATUS OF THUMBNAIL
PICTURE. IF ON STATUS, ENCRYPT tn_block FOR STORING
THUMBNAIL PICTURE AND ITS CP_Info_thumbnail ()     S108

DETERMINE FILE FOR STORING ABOVE tn_block
AND RECORD tn_block     S109

STORE ENCRYPTION ON/OFF INFORMATION OF ABOVE
tn_block IN THUMBNAIL-INFORMATION FILE AND RECORD
THUMBNAIL-INFORMATION FILE     S110

END

# F I G. 3 0

DATABASE, THUMBNAIL INFORMATION AND THUMBNAIL PICTURE

61 UI INPUT
85 STATIC-PICTURE INPUT
62 VIDEO OUTPUT
70 AUDIO OUTPUT

69 CON-TROLLER
67 THUMB-NAIL ENCODER
86 CONTENT-PROTECTION-INFORMATION-DETECTION UNIT
64 CGMS-INSERTION UNIT
63 MACRO-VISION INSERTION UNIT
65 MPEG2-AV DECODER
66 SOURCE DEPACKETIZER /SEPARATION UNIT
71 DE-CRYPTION UNIT
72 ECC-DECODING UNIT
73 DEMODU-LATION UNIT
74 DRIVE
75 RE-CORDING MEDIUM
76 EN-CRYPTION UNIT
77 ECC-ENCODING UNIT
78 MODU-LATION UNIT

## F I G. 3 1

START OF PROCESSING TO
CREATE THUMBNAIL OF PICTURE
SPECIFIED BY USER

S201

SPECIFY PlayList

S202

START VIDEO REPRODUCTION

S203

LET USER SEARCH FOR SCENE AND
PRESS MARK BUTTON DURING
REPRODUCTION OR AT TEMPORARY HALT

S204

DETERMINE MARK POSITION

S205

IS PICTURE AT MARK POSITION
TO BE USED AS THUMBNAIL?　　　NO

S206　YES

ACQUIRE PICTURE AT
MARK POSITION

S208

ACQUIRE STILL PICTURE
TO BE USED AS THUMBNAIL
FROM EXTERNAL INPUT

S207

ACQUIRE AV-STREAM CONTENT
PROTECTION INFORMATION AT
MARK POSITION

S209

ACQUIRE CONTENT PRO-
TECTION INFORMATION OF
ABOVE STILL PICTURE

S210

ENCODE PICTURE INTO THUMBNAIL

S211

CREATE CP_Info_thumbnail() OF
THUMBNAIL PICTURE

S212

DETERMINE ENCRYPTION ON/OFF STATUS OF
THUMBNAIL PICTURE. IF ON STATUS, ENCRYPT
tn_block FOR STORING THUMBNAIL PICTURE
AND ITS CP_Info_thumbnail()

S213

DETERMINE FILE FOR STORING ABOVE
tn_block AND RECORD tn_block

S214

STORE ENCRYPTION ON/OFF INFORMATION OF ABOVE
tn_block IN THUMBNAIL-INFORMATION FILE
AND RECORD THUMBNAIL-INFORMATION FILE

END

F I G. 3 2

DATABASE, THUMBNAIL INFORMATION AND THUMBNAIL PICTURE

69 CONTROLLER

71 DE-CRYPTION UNIT

72 ECC-DECODING UNIT

73 DEMODU-LATION UNIT

74 DRIVE

75 RE-CORDING MEDIUM

66 SOURCE DEPACKETIZER /SEPARATION UNIT

80 THUMB-NAIL DECODER

81 GRAPHIC-PICTURE-PROCESSING UNIT

65 MPEG2-AV DECODER

82

64 CGMS-INSERTION UNIT

63 MACRO-VISION INSERTION UNIT

61 UI INPUT

62 VIDEO OUTPUT

70 AUDIO OUTPUT

49

# F I G. 3 3

```
┌─────────────────────────────────────────┐
│  START OF PROCESSING TO REPRODUCE        │
│  THUMBNAIL OF REPRESENTATIVE OR          │
│  CHARACTERISTIC PICTURE OF AV STREAM     │
└─────────────────────────────────────────┘
                    ↓
```

| READ OUT APPLICATION DATABASE INFORMATION FILE | S301 |

| DETERMINE THUMBNAIL PICTURE TO BE REPRODUCED | S302 |

| READ OUT INFORMATION ON THUMBNAIL PICTURE FROM THUMBNAIL-INFORMATION FILE | S303 |

| IDENTIFY THUMBNAIL-PICTURE FILE CONTAINING ABOVE THUMBNAIL PICTURE AND ENCRYPTION ON/OFF STATUS OF THUMBNAIL PICTURE | S304 |

| READ OUT tn_block CONTAINING ABOVE THUMBNAIL PICTURE FROM THUMBNAIL-PICTURE FILE. IF ON STATUS, DECRYPT tn_block | S305 |

| ACQUIRE CP_Info_thumbnail () OF THUMBNAIL PICTURE BEING REPRODUCED | S306 |

| DECODE THUMBNAIL PICTURE | S307 |

| ADD CGMS AND MACROVISION TO THUMBNAIL DISPLAY IN ACCORDANCE WITH CP_Info_thumbnail () | S308 |

| OUTPUT DISPLAY PICTURE OF THUMBNAIL AS VIDEO SIGNAL | S309 |

```
                    ↓
              ┌──────────┐
              │   END    │
              └──────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000013720 A
- JP 4163768 A